# EUROPEAN PATENT SPECIFICATION

(11) **EP 3 815 960 B1**
(45) Date of publication and mention of the grant of the patent: **28.02.2024**
(21) Application number: 19825003.7
(22) Date of filing: 16.04.2019
(51) Int. Cl.: B60M 3/00, B60M 3/02, H02M 1/10, B60L 9/30, B60L 15/00, B60L 9/00, H02M 1/00, H02M 7/797

(54) **METHOD AND APPARATUS FOR HANDLING GRID-SIDE CONVERTER APPARATUS OF MULTI-CURRENT ELECTRIC LOCOMOTIVE**
VERFAHREN UND VORRICHTUNG ZUR HANDHABUNG EINES NETZWERKSEITIGEN UMRICHTERGERÄTS EINER ELEKTRISCHEN MEHRSTROMLOKOMOTIVE
PROCÉDÉ ET APPAREIL POUR MANIPULER UN APPAREIL CONVERTISSEUR CÔTÉ RÉSEAU D'UNE LOCOMOTIVE ÉLECTRIQUE MULTI-COURANT

(30) Priority: 26.06.2018 CN 201810672799
(43) Date of publication of application: 05.05.2021
(73) Proprietor: JIA, Jingyan, Shanxi 030002 (CN)
(72) Inventor: CAO, Zhiyu, Zhuzhou Hunan 412007 (CN); JIA, Jingyan, Taiyuan Shanxi 030002 (CN)
(74) Representative: Barker Brettell LLP
(86) International application number: PCT/CN2019/082871
(87) International publication number: WO 2020/001133

(56) References cited:
- EP-A1- 0 330 055
- EP-A2- 0 952 030
- EP-A2- 2 586 646
- WO-A2-99/35733
- CN-A- 1 188 453
- CN-A- 104 085 311
- CN-A- 104 467 455
- CN-A- 108 819 800
- DE-A1- 3 226 549
- DE-A1- 10 204 219
- DE-A1-102010 039 699

## Description

### Technical Field

The present disclosure relates to the technical field of multi-system electric locomotive, in particular to a processing method and apparatus for a grid-side power converter system of the multi-system electric locomotive.

### Background

A multi-system electric locomotive refers to an electric locomotive which can run under two or more than two kinds of railway power supply systems. In order to adapt to voltages and frequencies of different railway power supply systems, and to fulfil requirements in current harmonic and input impedance requirements of different countries, the volume, weight and cost of design and manufacturing of a grid-side power converter system (including transformer, four-quadrant converter, grid-side filter, DC-link, secondary resonance circuit, etc.) of the multi-system electric locomotive are very high. Design and manufacturing of this kind of grid-side conversion system is very difficult and costly.

Aiming at the problems mentioned above, an effective solution has not been proposed yet.

DE 102 04 219 A1 discloses a system that includes at least three sub-systems, each comprising a supply-side DC inverter connected to a medium-frequency DC inverter, connected to a medium-frequency transformer, connected to a load-side medium-frequency DC inverter, connected to a smoothing capacitor. The sub-systems are connected in parallel or series on the supply side. The sub-systems may be connected at the load side in a star circuit to form a three-phase system.

EP 2 586 646 A2 discloses an electric interface that is connected to power supply and direct current (DC) voltage side of rectifier of a module. The primary sides of transformers of the modules are connected directly by an electric interface and indirectly through an inverter. The DC side of a rectifier of one of the modules is connected with an electric terminal for connecting the arrangement to an intermediate circuit so that power for operating a driving motor is transmitted from the electric power supply network through rectifiers and inverters in the intermediate circuit.

DE 10 2010 039699 A1 discloses a drive system for a rail vehicle. This drive system has two partial converter systems on the line-side feed system and a load-side self-commutated converter with an output-side three-phase motor, each partial converter system having n AC / AC converters, a medium-frequency transformer system with k medium-frequency transformers, each of which has n primary windings and j secondary windings. A filter choke can be connected electrically in parallel between the two partial converter systems by means of a switching device and with DC voltage-side connections of the two partial converter systems and the DC voltage-side connections of the self-commutated converter on the load side can be connected to one another by means of a switching device unit at which a DC mains voltage is present. This results in a drive system for rail vehicles that can be easily configured for any mains voltage.

### Summary

According to the invention there is provided a processing method for a grid side power converter system of a multi-system electric locomotive and a processing apparatus for the same.

### Brief Description of the Drawings

The invention is defined in the appended claims.

The accompanying drawings constituting a part of the present disclosure are used for providing further understanding of the present disclosure.

In the accompanying drawings, for a 3kV DC railway power supply system, the sub-module grouping scheme we choose is L=N/2, and M=2; and for a 1.5kV DC railway power supply system, the sub-module grouping scheme we choose is P=N, and Q=1.
**Fig.1** is a flowchart of a processing method for a grid-side power converter system of a multi-system electric locomotive according to an embodiment of the present disclosure.
**Fig.2** is an equivalent circuit diagram of a processing method for a grid-side power converter system of a multi-system electric locomotive under a 25kV/50Hz railway power supply system according to an embodiment of the present disclosure.
**Fig.3** is an equivalent circuit diagram of a processing method for a grid-side power converter system of a multi-system electric locomotive under a 15kV/16.7Hz railway power supply system according to an embodiment of the present disclosure.
**Fig.4** is an equivalent circuit diagram of a processing method for a grid-side power converter system of a multi-system electric locomotive under a 3kV DC railway power supply system according to an embodiment of the present disclosure.
**Fig.5** is an equivalent circuit diagram of a processing method for a grid-side power converter system of a multi-system electric locomotive under a 1.5kV DC railway power supply system according to an embodiment of the present disclosure.
**Fig.6** is a schematic diagram of the implementation of a grid-side power converter system of a multi-system electric locomotive according to an embodiment of the present disclosure.
**Fig.7** is a schematic circuit diagram of a sub-module in a grid-side power converter system of a multi-system electric locomotive according to an example of the present disclosure.
**Fig.8** is a schematic diagram of a processing apparatus for a grid-side power converter system of a multi-system electric locomotive according to an embodiment of the present disclosure.

### Detailed Description of the Embodiments

It is to be noted that the embodiments in the disclosure and characteristics in the embodiments may be combined without conflicts. The disclosure will be described below with reference to the drawings and in combination with the embodiments in detail. In the embodiments, for a 3kV DC railway power supply system, the sub-module grouping scheme we choose is L=N/2, and M=2; and for a 1.5kV DC railway power supply system, the sub-module grouping scheme we choose is P=N, and Q=1.

In order to make those skilled in the art understand the solutions of the present disclosure better, the technical solutions in the embodiments of the present disclosure are clearly and completely elaborated below in combination with the accompanying drawings.

On the basis of the embodiment of the present disclosure, all other embodiments obtained on the premise of no creative work of those skilled in the art should fall within the protection scope of the present disclosure.

It should be noted that the specification and claims of the application and terms "first", "second", etc. in the foregoing drawings are used for distinguishing similar objects rather than describing a specific sequence or a precedence order. It should be understood that the data used in this way can be interchangeable where appropriate to facilitate the embodiments of the present disclosure described here. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

For ease of description, part of the nouns or terms involved in the embodiments of the present disclosure is described below.

A Modular Medium-voltage Converter (MMC) realizes AC/DC conversion under a medium voltage by being connected to a basic converter module SM in series. That is, the basic module SM may be realized by either a half-bridge circuit structure or an H-type full-bridge structure. In the industry, the MMC technology is widely used in the field of electric power, especially in the field of high voltage direct current. In the field of rail transport, the main application of MMC is also concentrated in the field of static converter of railway grid, that is, by using the MMC technology, a three-phase 50Hz voltage of the common grid is changed to a single-phase 15kV/16.7Hz voltage or a single-phase 25kV/50Hz voltage.

According to the embodiments of the present disclosure, a processing method for a grid-side power converter system of a multi-system electric locomotive is provided.

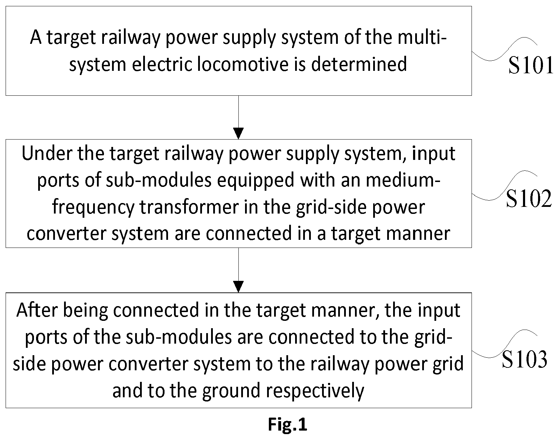

Fig.1 is a flowchart of a processing method for a grid-side power converter system of a multi-system electric locomotive according to an embodiment of the present disclosure. As shown in Fig.1, the method includes the following steps.

At S101, a target railway power supply system of a multi-system electric locomotive is determined.

At S102, under the target railway power supply system, input ports of sub-modules equipped with a medium-frequency transformer in the grid-side power converter system are connected in a target manner.

At S103, after the input ports of sub-modules are connected in the target manner, the grid-side power converter system is connected to the railway power supply grid and to the ground respectively.

By determining the target railway power supply system of the multi-system electric locomotive, under target railway power supply system of a multi-system electric locomotive is determined; under the target railway power supply system, input ports of sub-modules equipped with a medium-frequency transformer in the grid-side power converter system are connected in a target manner ; and after the input ports of sub-modules are connected in the target manner, the grid-side power converter system is connected to the railway power supply grid and to the ground respectively, the processing method for a grid-side power converter system of a multi-system electric locomotive provided by the embodiments of the present disclosure solves the problems of large volume and weight, high manufacturing difficulty and high manufacturing cost of a transformer required by the grid-side power converter system of the multi-system electric locomotive in the related technology. By adopting the medium-frequency transformer, the traditional transformer with high weight, volume, manufacturing difficulty and manufacturing cost required by the grid-side power converter system of the multi-system electric locomotive is avoided, and it is easier to be realized on a power-distributed EMU/high-speed train. At the same time, by adopting an n+x redundant design, the reliability of the grid-side power converter system of the multi-system electric locomotive is further improved greatly.

In the processing method for a grid-side power converter system of a multi-system electric locomotive provided by the embodiments of the present disclosure, after the input ports of the sub-modules is connected in the target manner, and then the input ports of the sub-modules is connected to the power supply grid and to the ground respectively, the method further includes that: the sub-module is controlled to work in an corresponding operating mode according to the target railway power supply system and the state of operation of the multi-system electric locomotive.

In the processing method for a grid-side power converter system of a multi-system electric locomotive provided by the embodiments of the present disclosure, the grid-side power converter system includes: a power supply bus, a ground bus, N sub-modules and a plurality of switching components. Each sub-module consists of a positive input port, a negative input port, a positive output port and a negative output port. The positive input port of each sub-module is connected to the power supply bus through the switching component. The negative input port of each sub-module is connected to the ground bus through the switching component. The negative input port of each sub-module is connected to the positive input port of the next sub-module through the switching component. The negative input port of the first sub-module is connected to the positive input port of the second sub-module through the switching component, and the negative input port of the second sub-module is connected to the positive input port of the third sub-module through the switching component, until the negative input port of the (N-1)-th sub-module is connected to the positive input port of the N-th sub-module through the switching component. The negative input port of the N-th sub-module is connected to the positive input port of the first sub-module through the switching component. The power supply bus is connected to an Alternate Current (AC) or Direct Current (DC) power supply grid by closing an AC or DC switch; output ports of all sub-modules are connected to the DC-link parallelly.

In the processing method for a grid-side power converter system of a multi-system electric locomotive provided by the embodiments of the present disclosure, when the target railway power supply system is a 25kV/50Hz railway power supply system, the input ports of the sub-modules using the medium-frequency transformer in the grid-side power converter system is connected in the target manner includes that: the input ports of all the sub-modules are connected in series in turn. That after the input ports of the sub-modules is connected in the target manner, the input ports of the sub-modules is respectively connected to the power supply grid and the ground includes that: after the input ports of all the sub-modules are connected in series, the input ports of all the sub-modules are connected to the 25kV/50Hz power supply grid and to the ground respectively.

Optionally, in the processing method for a grid-side power converter system of a multi-system electric locomotive provided by the embodiments of the present disclosure, that the input ports of all the sub-modules are connected in series in turn includes that: the negative input port of the first sub-module is connected to the positive input port of the second sub-module, and the negative input port of the second sub-module is connected to the positive input port of the third sub-module, until the negative input port of the (N-1)-th sub-module is connected to the positive input port of the N-th sub-module. The N is the total number of sub-modules in the grid-side converter. That after the input ports of all the sub-modules are connected in series, the input ports of all the sub-modules are connected to the 25kV/50Hz power supply grid and to the ground respectively includes that: the positive input port of the first sub-module is connected to the 25kV/50Hz power supply grid, and the negative input port of the N-th sub-module is connected to the ground. That the sub-module is controlled to work in the corresponding operating mode according to the target railway power supply system and the state of operation of the multi-system electric locomotive includes that: under the 25kV/50Hz railway power supply system and under the condition that the multi-system electric locomotive is in a traction operating state, the sub-module chooses a rectifier mode; when the multi-system electric locomotive is in a regenerative braking operating state, the sub-module chooses an inverter operating mode.

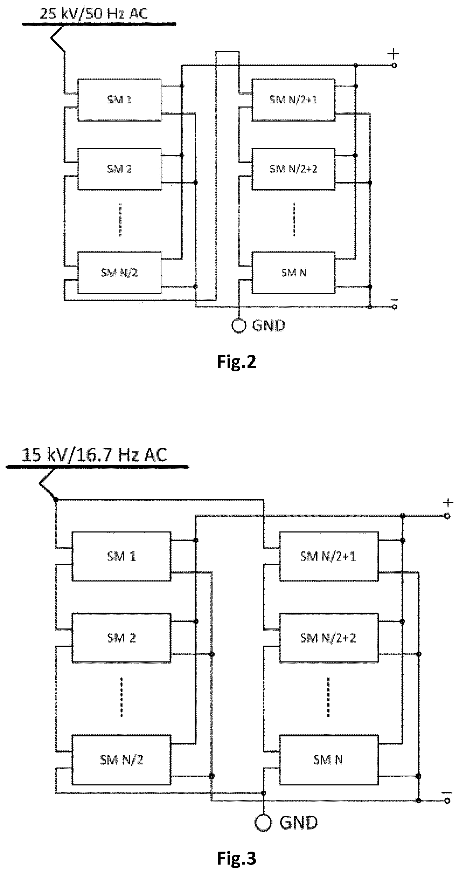

For example, as shown in Fig.2, the grid-side power converter system has N sub-modules SM. Each sub-module includes two AC or two DC input ports and two DC output ports. Positive and negative DC electrodes of all sub-modules are connected in parallel respectively to form the DC output port of the grid-side power converter system of the multi-system electric locomotive. Under the 25kV/50Hz railway power supply system, after being connected in series, the input ports of all the sub-modules SM1, ..., SM N are respectively connected to the 25kV/50Hz power supply grid and the ground. The effective value of an input voltage of each module is 25/NkV (the peak voltage is 35.4/NkV).

Optionally, in the processing method for a grid-side power converter system of a multi-system electric locomotive provided by the embodiments of the present disclosure, that the input ports of all the sub-modules are connected in series in turn includes that: the switching component between the negative input port of the first sub-module and the positive input port of the second sub-module is closed, and the switching component between the negative input port of the second sub-module and the positive input port of the third sub-module is closed, until the switching component between the negative input port of the (N-1)-th sub-module and the positive input port of the N-th sub-module is closed; the switching component between the positive input port of the first sub-module and the power supply bus is closed, and the switching component between the negative input port of the N-th sub-module and the ground bus is closed. That after the input ports of all the sub-modules are connected in series, the input ports of all the sub-modules are respectively connected to the 25kV/50Hz power supply grid and the ground includes that: the AC switch between the power supply bus and the 25kV/50Hz AC power supply grid is closed, and the ground bus is always connected to the ground.

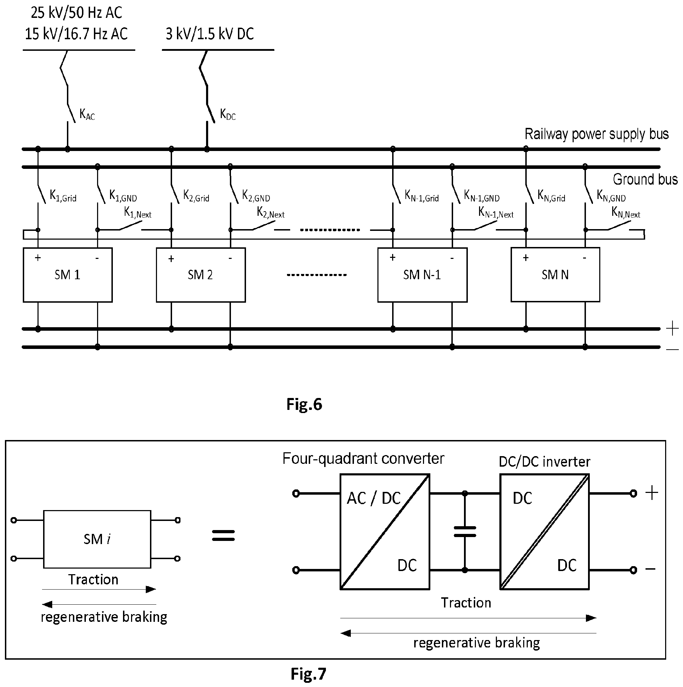

For example, the first sub-module is SM1, the second sub-module is SM2, the third sub-module is SM3, the (N-1)-th sub-module is SMN-1, the N-th sub-module is SMN, and so on; and the switching component between the SM1 and the SM2 is closed, the switching component between the SM2 and the SM3 is closed, and so on, until the switching component between the SMN-1 and the SMN is closed. An AC main breaker (KAC as shown in Fig.6) between the SM1 and the 25kV/50Hz power supply grid is closed, and the switching component (corresponding to KN, GND in Fig.6) between the SMN and the ground is closed.

As shown in Fig.6, under the 25kV/50Hz railway power supply system, KAC is closed, KDC is open, K1, Grid is closed, K2, Grid, ..., KN, Grid are open, K1, GND, ..., KN-1, GND are open, KN, Grid is closed, K1, Next, ..., KN-1, Next are closed, and KN, Next is open. In the topology similar to a loop grid of the circuit, under the 25kV/50Hz railway power supply system, except being connected to the power supply bus through the first sub-module SM 1 and being connected to the ground bus through the N-th sub-module SM 1, it may also be connected to the power supply bus through any i-th sub-module and connected to the ground bus through the (i-1)-th sub-module. Thus, the fault redundancy and the higher reliability are realized.

It is to be noted that in Fig.6, KAC is the AC main breaker, KDC is the DC main breaker, the power supply bus is connected to the AC or DC Overhead Contact line System (OCS) through KAC and KDC, and the ground bus is grounded through wheel-rail contact.

In the processing method for a grid-side power converter system of a multi-system electric locomotive provided by the embodiments of the present disclosure, when the target railway power supply system is a 15kV/16.7Hz railway power supply system, that the input ports of the sub-modules using the medium-frequency transformer in the grid-side power converter system is connected in the target manner includes that: the N sub-modules are divided into two groups, each group including N/2 sub-modules; the input ports of the N/2 sub-modules in each group of sub-modules are connected in series in turn; and the input ports of the two groups of sub-modules are connected in parallel, wherein the N denotes the total number of sub-modules in the grid-side converter. That after the input ports of the sub-modules is connected in the target manner, the input ports of the sub-modules is respectively connected to the power supply grid and the ground includes that: after the input ports of the two groups of sub-modules are connected in parallel, the input ports of the two groups of sub-modules are respectively connected to the 15kV/16.7Hz power supply grid and the ground.

In the processing method for a grid-side power converter system of a multi-system electric locomotive provided by the embodiments of the present disclosure, that the input ports of the N/2 sub-modules in each group of sub-modules are connected in series in turn includes that: the negative input port of the first sub-module is connected to the positive input port of the second sub-module, and the negative input port of the second sub-module is connected to the positive input port of the third sub-module, until the negative input port of the (N/2-1)-th sub-module is connected to the positive input port of the (N/2)-th sub-module; and the negative input port of the (N/2+1)-th sub-module is connected to the positive input port of the (N/2+2)-th sub-module, and the negative input port of the (N/2+2)-th sub-module is connected to the positive input port of the (N/2+3)-th sub-module, until the negative input port of the (N-1)-th sub-module is connected to the positive input port of the N-th sub-module, wherein the N denotes the total number of sub-modules in the grid-side converter. That the input ports of the two groups of sub-modules are connected in parallel includes that: the positive input port of the first sub-module is connected to the positive input port of the (N/2+1)-th sub-module in parallel, and the negative input port of the (N/2)-th sub-module is connected to the negative input port of the N-th sub-module in parallel. That after the input ports of the two groups of sub-modules are connected in parallel, the input ports of the two groups of sub-modules are respectively connected to the 15kV/16.7Hz power supply grid and the ground includes that: after the positive input port of the first sub-module is connected to the positive input port of the (N/2+1)-th sub-module in parallel, the positive input port of the first sub-module and the positive input port of the (N/2+1)-th sub-module are connected to the 15kV/16.7Hz power supply grid, and after the negative input port of the (N/2)-th sub-module is connected to the negative input port of the N-th sub-module in parallel, the negative input port of the (N/2)-th sub-module and the negative input port of the N-th sub-module are connected to the ground. That the sub-module is controlled to work in the corresponding operating mode according to the target railway power supply system and the state of operation of the multi-system electric locomotive includes that: under the 15kV/16.7Hz railway power supply system and under the condition that the multi-system electric locomotive is in the traction operating state, the sub-module chooses the rectifier mode; when the multi-system electric locomotive is in the regenerative braking operating state, the sub-module chooses the inverter operating mode.

Optionally, in the processing method for a grid-side power converter system of a multi-system electric locomotive provided by the embodiments of the present disclosure, that the input ports of N/2 sub-modules in each group of sub-modules are connected in series in turn includes that: the switching component between the negative input port of the first sub-module and the positive input port of the second sub-module is closed, and the switching component between the negative input port of the second sub-module and the positive input port of the third sub-module is closed, until the switching component between the negative input port of the (N/2-1)-th sub-module and the positive input port of the (N/2)-th sub-module is closed; the switching component between the negative input port of the (N/2+1)-th sub-module and the positive input port of the (N/2+2)-th sub-module is closed, and the switching component between the negative input port of the (N/2+2)-th sub-module and the positive input port of the (N/2+3)-th sub-module is closed, until the switching component between the negative input port of the (N-1)-th sub-module and the positive input port of the N-th sub-module is closed, wherein the N denotes the total number of sub-modules in the grid-side converter. That the input ports of two groups of sub-modules are connected in parallel includes that: the switching component between the positive input port of the first sub-module and the power supply bus is closed, and the switching component between the positive input port of the (N/2+1) sub-module and the power supply bus is closed; the switching component between the negative input port of the (N/2) sub-module and the ground bus is closed, and the switching component between the negative input port of the N-th sub-module and the ground bus is closed. That after the both groups of sub-modules in input side are connected in parallel, the both parallel connected groups of sub-modules to the 15kV/16.7Hz power supply grid and to the ground respectively are connected to the 15kV/16.7Hz power supply grid and the ground includes that: the AC switch between the power supply bus and the 15kV/16.7Hz AC power supply grid is closed, and the ground bus is always connected to the ground respectively.

For example, as shown in Fig.3, the grid-side power converter system has N sub-modules SM. Each sub-module includes two AC or DC input ports and two DC output ports. The positive and negative DC electrodes of all sub-modules are connected in parallel respectively to form the DC output port of the grid-side power converter system of the multi-system electric locomotive. Under the 15kV/16.7Hz railway power supply system, the input ports of the sub-modules SM 1, , SM N/2 and the input ports of the sub-modules SM N/2+1, , SM N are respectively connected in series, and then connected in parallel and connected to the 15kV/16.7Hz power supply grid and the ground. The effective value of an input voltage of each module is 30/N kV (the peak voltage is 42.4/N kV).

As shown in Fig.6, under the 15kV/16.7Hz railway power supply system, KAC is closed, KDC is open, K1, Grid is closed, K2, Grid, ..., KN/2, Grid are open, KN/2+1, Grid is closed, KN/2+2, Grid, ... , KN, Grid are open, K1, GND, ..., KN/2-1, GND are open, KN/2, Grid is closed, KN/2+1, GND, ..., KN-1, GND are open, KN, Grid is closed, K1, Next, ..., KN/2-1, Next are closed, KN/2, Next is open, KN/2, Next, ..., KN-1, Next are closed, and KN, Next is open. Under the 15kV/16.7Hz railway power supply system, because the circuit is composed of two topologies that are similar to the loop grid and connected in parallel, each circuit similar to the loop grid may be connected to the power supply bus through the positive input port of any sub-module SM i and connected to the ground bus through the negative input port of the previous sub-module SM i-1, thus realizing the redundancy and high reliability.

In the processing method for a grid-side power converter system of a multi-system electric locomotive provided by the embodiments of the present disclosure, when the target railway power supply system is a 3kV DC railway power supply system, that the input ports of the sub-modules in the grid-side power converter system is connected in the target manner includes that: the N sub-modules are divided into L groups of sub-modules, each group of sub-modules including M sub-modules; the input ports of the M sub-modules in each group are connected in series; and all L groups of sub-modules in input side are connected in parallel in turn , wherein the N denotes the total number of sub-modules in the grid-side converter, the L is the number of groups of sub-modules, the M is the number of sub-modules included in each group, and N=L*M. That after the input ports of the sub-modules is connected in the target manner, the input ports of the sub-modules is connected to the power supply grid and the ground respectively includes that: after all L groups of sub-modules in input side are connected in parallel in turn, the all L parallel connected groups of sub-modules are connected to the 3kV DC power supply grid and to the ground respectively.

In the processing method for a grid-side power converter system of a multi-system electric locomotive provided by the embodiments of the present disclosure, that all L groups of sub-modules in input side are connected in parallel in turn includes that: the negative input port of the first sub-module in the first group of sub-modules is connected to the positive input port of the second sub-module, and the negative input port of the second sub-module is connected to the positive input port of the third sub-module, until the negative input port of the (M-1)-th sub-module is connected to the positive input port of the M-th sub-module; the negative input port of the (M+1)-th sub-module in the second group of sub-modules is connected to the positive input port of the (M+2)-th sub-module, and the negative input port of the (M+2)-th sub-module is connected to the positive input port of the (M+3)-th sub-module, until the negative input port of the (2M-1)-th sub-module is connected to the positive input port of the (2M)-th sub-module; and so on, until the negative input port of the ((L-1)*M+1)-th sub-module in the L-th group of sub-modules is connected to the positive input port of the ((L-1)*M+2)-th sub-module, and the negative input port of the ((L-1)*M+2)-th sub-module is connected to the positive input port of the ((L-1)*M+3)-th sub-module, until the negative input port of the (L*M-1)-th sub-module is connected to the positive input port of the (L*M)-th sub-module.

That all L groups of sub-modules in input side are connected in parallel in turn includes that: the positive input ports of the first sub-module, the (M+1)-th sub-module up to the ((L-1)*M+1)-th sub-module are connected in parallel, and the negative input ports of the M-th sub-module, the (2M)-th sub-module up to the (L*M)-th sub-module are connected in parallel.

That after all L groups of sub-modules in input side are connected in parallel in turn, the all L parallel connected groups of sub-modules are connected to the 3kV DC power supply grid and to the ground respectively includes that: after the positive input ports of the first sub-module, the (M+1)-th sub-module up to the ((L-1)*M+1)-th sub-module are connected, these parallel connected positive input ports to the 3kV DC power supply grid; and after the negative input ports of the M sub-module, the (2M)-th sub-module up to the (L*M)-th sub-module are connected in parallel, these parallel connected negative input powers to the ground are connected to the ground. That the sub-module is controlled to work in the corresponding operating mode according to the target railway power supply system and the state of operation of the multi-system electric locomotive includes that: under the 3kV DC railway power supply system and under the condition that the multi-system electric locomotive is in a traction operating state, the sub-modules are operated in forward DC-DC mode (i.e. boost mode); when the multi-system electric locomotive is in a regenerative braking operating state and the 3kV DC power supply grid has an capability of energy absorption, the sub-modules are operated in reverse DC-DC mode (i.e. buck mode); when the multi-system electric locomotive is in a non-regenerative braking operating state, the sub-modules are in blocking state; where the forward DC-DC mode means the electric energy flow from the input ports to the output ports, and the reverse DC-DC mode means the electric energy flows from the output ports to the input ports.

Optionally, in the processing method for a grid-side power converter system of a multi-system electric locomotive provided by the embodiments of the present disclosure, that the input ports of M sub-modules in each group of sub-modules are connected in series includes that: the switching component between the negative input port of the first sub-module in the first group of sub-modules and the positive input port of the second sub-module is closed, and the switching component between the negative input port of the second sub-module and the positive input port of the third sub-module is closed, until the switching component between the negative input port of the (M-1)-th sub-module and the positive input port of the M-th sub-module is closed; the switching component between the negative input port of the (M+1)-th sub-module in the second group of sub-modules and the positive input port of the (M+2)-th sub-module is closed, and the switching component between the negative input port of the (M+2)-th sub-module and the positive input port of the (M+3)-th sub-module is closed, until the switching component between the negative input port of the (2M-1)-th sub-module and the positive input port of the (2M)-th sub-module is closed; and so on, until the switching component between the negative input port of the ((L-1)*M+1)-th sub-module in the L-th group of sub-modules and the positive input port of the ((L-1)*M+2)-th sub-module is closed, the switching component between the negative input port of the ((L-1)*M+2)-th sub-module in the L-th group of sub-modules and the positive input port of the ((L-1)*M+3)-th sub-module is closed, until the switching component between the negative input port of the (L*M-1)-th sub-module in the L-th group of sub-modules and the positive input port of the (L*M)-th sub-module is closed. That all L groups of sub-modules in input side are connected in parallel in turn includes that: the switching component between the positive input port of the first sub-module and the power supply bus is closed, the switching component between the positive input port of the (M+1)-th sub-module and the power supply bus is closed, until the switching component between the positive input port of the ((L-1)*M+1)-th sub-module and the power supply bus is closed; and the switching component between the negative input port of the M-th sub-module and the ground bus is closed, the switching component between the negative input port of the (2M)-th sub-module and the ground bus is closed, until the switching component between the negative input port of the (L*M)-th sub-module and the ground bus is closed. That after all L groups of sub-modules in input side are connected in parallel in turn, the all L parallel connected groups of sub-modules are connected to the 3kV DC power supply grid and to the ground respectively includes that: the DC switch between the power supply bus and the 3kV DC power supply grid is closed, and the ground bus is always connected to the ground.

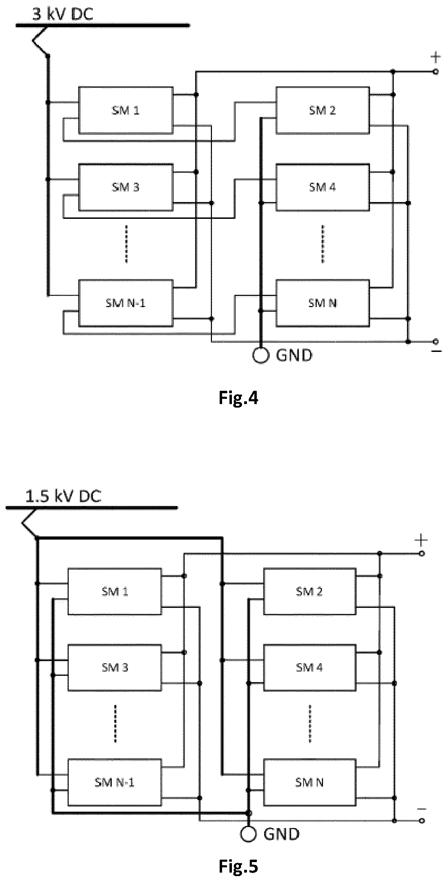

For example, as shown in Fig.4, the grid-side power converter system has N sub-modules SM. Each sub-module includes two AC or DC input ports and two DC output ports. The positive and negative DC electrodes of all sub-modules are connected in parallel respectively to form the DC output port of the grid-side power converter system of the multi-system electric locomotive. Under the 3kV DC railway power supply system, the input ports of the sub-modules SM 1 and SM 2 are connected in series, the input ports of the sub-modules SM 3 and SM 4 are connected in series, and so on, until the input ports of the sub-modules SM N-1 and SM N are connected in series, and then they are connected in parallel and connected to the 3kV DC power supply grid and the ground. The effective value of an input voltage of each module is 1.5kV.

As shown in Fig.6, under the 3kV DC railway power supply system, KAC is open, KDC is closed (KDC is the DC main breaker). Every two sub-modules is a group, such as SM 1 and SM 2, SM 3 and SM 4, , SM N-1 and SM N. Taking the group SM 1 and SM 2 for example, K1, Grid is closed, K1, GND is open, K2, Grid is open, K2, GND is closed, K1, Next is closed, K2, Next is open, and so on. Every two sub-modules of the circuit are connected in series and connected in parallel to the power supply bus and the ground bus. Therefore, any group of sub-modules may be cut in or cut out at any time, which has high fault redundancy and reliability.

It is to be noted that in embodiments of the present disclosure, the switching component between the first sub-module, the second sub-module and the third sub-module may also be closed, and the switching component between the fourth sub-module, the fifth sub-module and the sixth sub-module may be closed, until the switching component between the (N-2)-th sub-module, the (N-1)-th sub-module and the N-th sub-module is closed; and the first sub-module, the fourth sub-module up to the (N-2)-th sub-module are connected in parallel, and the third sub-module, the sixth sub-module up to the N-th sub-module are connected in parallel. In the embodiments of the present disclosure, the number of sub-modules that are connected in series to a group is not limited. Two sub-modules may be connected in series to a group, or three sub-modules may be connected in series to a group, and each sub-module is connected in parallel to the power supply bus and the ground bus. Therefore, any group of sub-modules may be cut in or cut out at any time, which has high fault redundancy and reliability.

In the processing method for a grid-side power converter system of a multi-system electric locomotive provided by the embodiments of the present disclosure, when the target railway power supply system is a 1.5kV DC railway power supply system, that input ports of sub-modules equipped with an medium-frequency transformer in the grid-side power converter system are connected in a target manner includes that: the N sub-modules are divided into P groups of sub-modules, each group of sub-modules including Q sub-modules; the input ports of the Q sub-modules in each group of sub-modules are connected in series; and all P groups of sub-modules are connected in parallel in turn, wherein the N denotes the total number of sub-modules in the grid-side converter, the P is the number of groups of sub-modules, the Q is the number of sub-modules included in each group of sub-modules, and N=P*Q. As the voltage of the 1.5kV DC railway power supply system is a half of the voltage of the 3kV DC railway power supply system, P=2L, and Q=M/2. That after the input ports of sub-modules are connected in the target manner, the grid-side power converter system is connected to the railway power supply grid and to the ground respectively includes that: after the input ports of all the sub-modules are connected in parallel, the input ports of all the sub-modules are respectively connected to the 1.5kV DC power supply grid and the ground.

In the processing method for a grid-side power converter system of a multi-system electric locomotive provided by the embodiments of the present disclosure, when the target railway power supply system is the 1.5kV DC railway power supply system, that the input ports of Q sub-modules in the group of sub-modules are connected in series includes that: the negative input port of the first sub-module in the first group of sub-modules is connected to the positive input port of the second sub-module, the negative input port of the second sub-module is connected to the positive input port of the third sub-module, until the negative input port of the (Q-1)-th sub-module is connected to the positive input port of the Q-th sub-module; the negative input port of the (Q+1)-th sub-module in the second group of sub-modules is connected to the positive input port of the (Q+2)-th sub-module, the negative input port of the (Q+2)-th sub-module is connected to the positive input port of the (Q+3)-th sub-module, until the negative input port of the (2Q-1)-th sub-module is connected to the positive input port of the (2Q)-th sub-module; and so on, until the negative input port of the ((P-1)*Q+1)-th sub-module in the P-th group of sub-modules is connected to the positive input port of the ((P-1)*Q+2)-th sub-module, the negative input port of the ((P-1)*Q+2)-th sub-module is connected to the positive input port of the ((P-1)*Q+3)-th sub-module, until the negative input port of the (P*Q-1)-th sub-module is connected to the positive input port of the (P*Q)-th sub-module. That the input ports between the groups of sub-modules are connected in parallel in turn includes that: the positive input ports of the first sub-module, the (Q+1)-th sub-module up to the ((P-1)*Q+1)-th sub-module are connected in parallel, and the negative input ports of the Q-th sub-module, the (2Q)-th sub-module up to the (P*Q)-th sub-module are connected in parallel.

That after the input ports of all the sub-modules are connected in parallel, the input ports of all the sub-modules are respectively connected to the 1.5kV DC power supply grid and the ground includes that:
after the positive input ports of the first sub-module, the (Q+1)-th sub-module up to the ((P-1)*Q+1)-th sub-module are connected in parallel, the positive input ports of the first sub-module, the (Q+1)-th sub-module up to the ((P-1)*Q+1)-th sub-module are connected to the 1.5kV DC power supply grid; and after the negative input ports of the Q sub-module, the (2Q)-th sub-module up to the (P*Q)-th sub-module are connected in parallel, the negative input ports of the Q sub-module, the (2Q)-th sub-module up to the (P*Q)-th sub-module are connected to the ground.

That the sub-module is controlled to work in the corresponding operating mode according to the target railway power supply system and the state of operation of the multi-system electric locomotive includes that: under the 1.5kV DC railway power supply system and under the condition that the multi-system electric locomotive is in a traction operating state, the sub-modules are operated in forward DC-DC mode (i.e. boost mode); when the multi-system electric locomotive is in a regenerative braking operating state and the 1.5kV DC power supply grid has an capability of energy absorption, the sub-modules are operated in reverse DC-DC mode (i.e. buck mode); when the multi-system electric locomotive is in a non-regenerative braking operating state, the sub-modules are in blocking state; where the forward DC-DC mode means the electric energy flow from the input ports to the output ports, and the reverse DC-DC mode means the electric energy flows from the output ports to the input ports.

Optionally, in the processing method for a grid-side power converter system of a multi-system electric locomotive provided by the embodiments of the present disclosure, that the input ports of all the sub-modules are connected in parallel includes that: That the input ports of Q sub-modules in the group of sub-modules are connected in series includes that: the switching component between the negative input port of the first sub-module in the first group of sub-modules and the positive input port of the second sub-module is closed, and the switching component between the negative input port of the second sub-module and the positive input port of the third sub-module is closed, until the switching component between the negative input port of the (Q-1)-th sub-module and the positive input port of the Q-th sub-module is closed; the switching component between the negative input port of the (Q+1)-th sub-module in the second group of sub-modules and the positive input port of the (Q+2)-th sub-module is closed, and the switching component between the negative input port of the (Q+2)-th sub-module and the positive input port of the (Q+3)-th sub-module is closed, until the switching component between the negative input port of the (2Q-1)-th sub-module and the positive input port of the (2Q)-th sub-module is closed; and so on, until the switching component between the negative input port of the ((P-1)*Q+1)-th sub-module in the P-th group of sub-modules and the positive input port of the ((P-1)*Q+2)-th sub-module is closed, the switching component between the negative input port of the ((P-1)*Q+2)-th sub-module and the positive input port of the ((P-1)*Q+3)-th sub-module is closed, until the switching component between the negative input port of the (P*Q-1)-th sub-module and the positive input port of the (P*Q)-th sub-module is closed.

That the all P groups of sub-modules are connected in parallel in turn includes that: the switching component between the positive input port of the first sub-module and the power supply bus is closed, the switching component between the positive input port of the (Q+1)-th sub-module and the power supply bus is closed, until the switching component between the positive input port of the ((P-1)*Q+1)-th sub-module and the power supply bus is closed; the switching component between the negative input port of the Q-th sub-module and the ground bus is closed, the switching component between the negative input port of the (2Q)-th sub-module and the ground bus is closed, until the switching component between the negative input port of the (P*Q)-th sub-module and the ground bus is closed. That after the input ports of sub-modules are connected in the target manner, the grid-side power converter system is connected to the railway power supply grid and to the ground respectively includes that: the DC switch between the power supply bus and the 15kV DC power supply grid is closed, and the ground bus is always connected to the ground.

For example, as shown in Fig.5, the grid-side power converter system has N sub-modules SM. Each sub-module includes two AC or DC input ports and two DC output ports. The positive and negative electrodes of the DC output ports of all the sub-modules are connected in parallel respectively to form the DC output port of the grid-side power converter system of the multi-system electric locomotive. Under the 1.5kV DC railway power supply system, the input ports of all the sub-modules SM 1, , SM N are respectively connected to the 1.5kV DC power supply grid and the ground. The effective value of the input voltage of each module is 1.5kV.

As shown in Fig.6, under the 1.5kV DC railway power supply system, KAC is open, KDC is closed, Ki, Grid of all the sub-modules is closed, Ki, GND is closed, Ki, Next is open (i represents the i-th sub-module). Each sub-module of the circuit may be cut in or cut out at any time, which has high fault redundancy and reliability. At the same time, under the 1.5kV DC railway power supply system, the locomotive has no need to operate at reduced rated power.

It is to be noted that as shown in Fig.7, the circuit structure of the sub-module SM includes a four-quadrant converter and a DC/DC converter including (intermediate frequency) transformer isolation. The four-quadrant converter may adopt different operating modes according to different current modes and the operating state of the locomotive, that is, in an AC railway power supply system, the traction operating state is rectification; in the AC railway power supply system, the regenerative braking operating state is inversion; in a DC railway power supply system, the traction operating state is boost chopping; and in the DC railway power supply system, the regenerative braking operating state is that generally, the DC power supply grid does not support regenerative braking (if the DC power supply grid supports the regenerative braking, a buck chopping operating mode may be used). The DC/DC converter is required to be able to vary in both directions and to include a transformer for electrical isolation of input/output and variation of voltage. In order to reduce the volume and weight, the transformer is usually the medium-frequency transformer. The DC/DC converter can be realized by using a PWM circuit (such as DAB) or a resonant converter circuit.

Taking output power of 7.2MW DC as an example, the specific implementation of the grid-side power converter system of the multi-system electric locomotive is illustrated below. In the implementation example, assuming that the conversion efficiency of the grid-side power converter system is 95%, then the input power is 7.58MW. The output voltage of the grid-side power converter system is 1.8kV. The number of sub-modules adopted is N, which is equal to 30. For the 3kV DC railway power supply system, the sub-module grouping scheme we choose is L=N/2=15, and M=2; and for the 1.5kV DC railway power supply system, the sub-module grouping scheme we choose is P=N=30, and Q=1. Under different railway power supply systems, the grouping and series-parallel combination mode of the sub-modules, as well as the voltage and current load of the sub-modules are shown in Table 2.

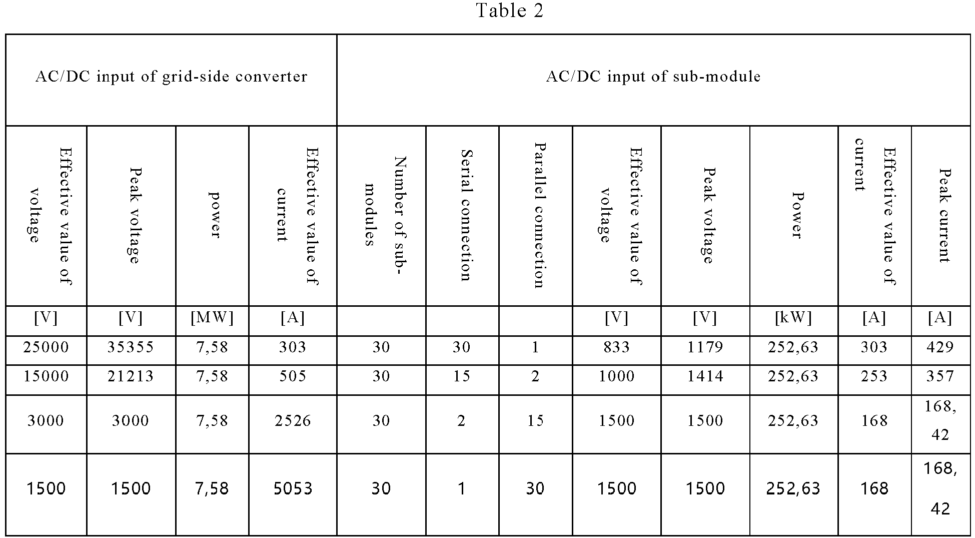

In specific implementation, an IGBT device of 3.3kV, 450/500A may be used. Of course, an IGBT module of 1.7kV or 1.2kV may be used for implementation, but the number N of sub-modules required also needs to be increased accordingly. The sub-module grouping schemes for 3kV and 1.5kV DC railway power supply systems also need to be adjusted accordingly.

It is to be noted that these steps presented in the flowchart of the accompanying drawings can be executed in a computer system like a group of computer executable instructions, and moreover, although a logical sequence is shown in the flowchart, in some cases, the presented or described steps can be performed in a sequence different from that described here.

The embodiments of the present disclosure also provide a processing apparatus for a grid-side power converter system of a multi-system electric locomotive. It is to be noted that the processing apparatus for a grid-side power converter system of a multi-system electric locomotive in the embodiments of the present disclosure may be used to perform the processing method for a grid-side power converter system of a multi-system electric locomotive provided by the embodiments of the present disclosure. The processing apparatus for a grid-side power converter system of a multi-system electric locomotive provided by the embodiments of the present disclosure is introduced below.

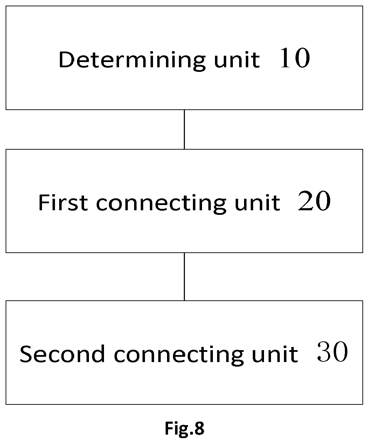

Fig.8 is a schematic diagram of a processing apparatus for a grid-side power converter system of a multi-system electric locomotive according to an embodiment of the present disclosure. As shown in Fig.8, the device includes: a determining unit 10, a first connecting unit 20 and a second connecting unit 30.

The determining unit 10 is configured to determine the target railway power supply system of the multi-system electric locomotive.

The first connecting unit 20 is configured to, under the target railway power supply system, connect input ports of a sub-modules equipped with a medium-frequency transformer in the grid-side power converter system in a target manner.

The second connecting unit 30 is configured to, after connecting the input ports of the sub-modules in the target manner, connect the grid-side power converter system to the railway power supply grid and to the ground respectively.

In the processing apparatus for a grid-side power converter system of a multi-system electric locomotive provided by the embodiments of the present disclosure, the determining unit 10 determines the target railway power supply system of the multi-system electric locomotive, the first connecting unit 20, under the target railway power supply system, connect input ports of a sub-modules equipped with a medium-frequency transformer in the grid-side power converter system in a target manner, and the second connecting unit 30, after connecting the input ports of the sub-modules in the target manner, connect the grid-side power converter system to the railway power supply grid and to the ground respectively. In this way, the problems in the related technology of large volume and weight, and high manufacturing difficulty and cost of a transformer required for the grid-side power converter system of the multi-system electric locomotive are solved. By adopting the medium-frequency transformer, the traditional transformer with high weight, volume, manufacturing difficulty and manufacturing cost required for the grid-side power converter system of the multi-system electric locomotive is avoided, and it is easier to be realized on a power-distributed EMU/high-speed train. At the same time, by adopting the n+x redundant design, the reliability of the grid-side power converter system of the multi-system electric locomotive is further improved greatly.

In the processing apparatus for a grid-side power converter system of a multi-system electric locomotive provided by the embodiments of the present disclosure, the device further includes: a control unit, configured to, after connecting the input ports of the sub-modules in the target manner, and then connecting the grid-side power converter system to the railway power grid and to the ground respectively, control the sub-modules to work in an operating mode according to the target railway power supply system and the state of operation of the multi-system electric locomotive.

In the processing apparatus for a grid-side power converter system of a multi-system electric locomotive provided by the embodiments of the present disclosure, the grid-side power converter system includes: wherein the grid-side power converter system consists of: a power supply bus, a ground bus, N sub-modules and a plurality of switching components; each sub-module consists of a positive input port, a negative input port, a positive output port and a negative output port; the positive input port of each sub-module is connected to the power supply bus through the switching component; the negative input port of each sub-module is connected to the ground bus through the switching component; and the negative input port of each sub-module is also connected to the positive input port of the next sub-module through the switching component; it means the negative input port of the first sub-module is connected to the positive input port of the second sub-module through the switching component, and the negative input port of the second sub-module is connected to the positive input port of the third sub-module through the switching component, until the negative input port of the (N-1)-th sub-module is connected to the positive input port of the N-th sub-module through the switching component; the negative input port of the N-th sub-module is connected to the positive input port of the first sub-module through the switching component; and the power supply bus is connected to an Alternate Current (AC) or Direct Current (DC) power supply grid by closing an AC or DC switch; output ports of all sub-modules are connected to the DC-link parallelly.

In the processing apparatus for a grid-side power converter system of a multi-system electric locomotive provided by the embodiments of the present disclosure, if the target railway power supply system is the 25kV/50Hz railway power supply system, the first connecting unit 20 includes: a first serial connection module, configured to connect the input ports of all the sub-modules in series in turn, and the second connecting unit 30 includes: a first connecting module, configured to after connecting the input ports of all sub-modules in series, connect all in series connected sub-modules with the 25kV/50Hz power supply grid and to the ground respectively.

In the processing apparatus for a grid-side power converter system of a multi-system electric locomotive provided by the embodiments of the present disclosure, the first serial connection module is further configured to connect the negative input port of the first sub-module to the positive input port of the second sub-module, and connect the negative input port of the second sub-module to the positive input port of the third sub-module, until connect the negative input port of the (N-1)-th sub-module to the positive input port of the N-th sub-module. N denotes the total number of sub-modules in the grid-side converter. The first connecting module is further configured to connect the positive input port of the first sub-module with the 25kV/50Hz power supply grid, and connect the negative input port of the N-th sub-module with the ground. The control unit is further configured to, under the 25kV/50Hz railway power supply system and under the condition that the multi-system electric locomotive is in a traction operating state, the sub-modules are operated in rectifier mode; when the multi-system electric locomotive is in a regenerative braking operating state, the sub-modules are operated in inverter operating mode.

In the processing apparatus for a grid-side power converter system of a multi-system electric locomotive provided by the embodiments of the present disclosure, the first serial connection module is further configured to close the switching component between the negative input port of the first sub-module and the positive input port of the second sub-module, and close the switching component between the negative input port of the second sub-module and the positive input port of the third sub-module, until close the switching component between the negative input port of the (N-1)-th sub-module and the positive input port of the N-th sub-module, close the switching component between the positive input port of the first sub-module and the power supply bus, and close the switching component between the negative input port of the N-th sub-module and the ground bus. The connecting module is further configured to close the AC switch between the power supply bus and the 25kV/50Hz AC power supply grid, and always connect the ground bus with the ground.

In the processing apparatus for a grid-side power converter system of a multi-system electric locomotive provided by the embodiments of the present disclosure, if the target railway power supply system is the 15kV/16.7Hz railway power supply system, the first connecting unit 20 further includes: a first grouping module, configured to divide N sub-modules into two groups, group of sub-modules consisting of N/2 sub-modules; a second serial connection module, configured to connect the input ports of the N/2 sub-modules in each group of sub-modules in series in turn; and a first parallel connection module, configured to connect the two groups of sub-modules in the input side in parallel, wherein the N denotes the total number of sub-modules in the grid-side converter. The second connecting unit 30 further includes: a second connecting module, configured to connect the both groups of sub-modules in input side in parallel and then connect the both parallel connected groups of sub-modules to the 15kV/16.7Hz power supply grid and to the ground respectively.

In the processing apparatus for a grid-side power converter system of a multi-system electric locomotive provided by the embodiments of the present disclosure, the second serial connection module is further configured to: connect the negative input port of the first sub-module to the positive input port of the second sub-module, and connect the negative input port of the second sub-module to the positive input port of the third sub-module, until connect the negative input port of the (N/2-1)-th sub-module to the positive input port of the (N/2)-th sub-module; and connect the negative input port of the (N/2+1)-th sub-module to the positive input port of the (N/2+2)-th sub-module, and connect the negative input port of the (N/2+2)-th sub-module to the positive input port of the (N/2+3)-th sub-module, until connect the negative input port of the (N-1)-th sub-module to the positive input port of the N-th sub-module. N denotes the total number of sub-modules in the grid-side converter. The first parallel connection module is further configured to connect the positive input port of the first sub-module to the positive input port of the (N/2+1)-th sub-module parallel, and connect the negative input port of the (N/2)-th sub-module with the negative input port of the N-th sub-module in parallel. The second connecting module is further configured to connect the positive input port of the first sub-module to the positive input port of the (N/2+1)-th sub-module in parallel, and then connect them with the 15kV/16.7Hz power supply grid, and connect the negative input port of the (N/2)-th sub-module with the negative input port of the N-th sub-module in parallel, and then connect them with the ground. The control unit is further configured to under the 15kV/16.7Hz railway power supply system and under the condition that the multi-system electric locomotive is in the traction operating state, control the sub-module to choose the rectifier mode, and when the multi-system electric locomotive is in the regenerative braking operating state, the sub-modules are operated in inverter operating mode.

In the processing apparatus for a grid-side power converter system of a multi-system electric locomotive provided by the embodiments of the present disclosure, the second serial connection module is further configured to: close the switching component between the negative input port of the first sub-module and the positive input port of the second sub-module, and close the switching component between the negative input port of the second sub-module and the positive input port of the third sub-module, until close the switching component between the negative input port of the (N/2-1)-th sub-module and the positive input port of the (N/2)-th sub-module; and close the switching component between the negative input port of the (N/2+1)-th sub-module and the positive input port of the (N/2+2)-th sub-module, and close the switching component between the negative input port of the (N/2+2)-th sub-module and the positive input port of the (N/2+3)-th sub-module, until close the switching component between the negative input port of the (N-1)-th sub-module and the positive input port of the N-th sub-module. N denotes the total number of sub-modules in the grid-side converter. The parallel connection module is further configured to: close the switching component between the positive input port of the first sub-module and the power supply bus, and close the switching component between the positive input port of the (N/2+1) sub-module and the power supply bus; and close the switching component between the negative input port of the (N/2) sub-module and the ground bus, and close the switching component between the negative input port of the N-th sub-module and the ground bus. The second connecting module is further configured to close the AC switch between the power supply bus and the 15kV/16.7Hz AC power supply grid, and always connect the ground bus with the ground.

In the processing apparatus for a grid-side power converter system of a multi-system electric locomotive provided by the embodiments of the present disclosure, when the target railway power supply system is a 3kV DC railway power supply system, the first connecting unit 20 further includes: a second grouping module, configured to divide the N sub-modules into L groups of sub-modules, each group of sub-modules including M sub-modules; a third serial connection module, configured to connect the input ports of the M sub-modules in each group in series; and a second parallel connection module, configured to connect all L groups of sub-modules in parallel in turn, wherein the N denotes the total number of sub-modules in the grid-side converter, L is the number of groups of sub-modules, M is the number of sub-modules included in each group, and N=L*M. The second connecting unit 30 further includes: a third connecting module, configured to connect the input ports between the groups of sub-modules in parallel in turn, and then connect them with the 3kV DC power supply grid and to the ground respectively.

In the processing apparatus for a grid-side power converter system of a multi-system electric locomotive provided by the embodiments of the present disclosure, the third serial connection module is further configured to: connect the negative input port of the first sub-module in the first group of sub-modules to the positive input port of the second sub-module, and connect the negative input port of the second sub-module to the positive input port of the third sub-module, until connect the negative input port of the (M-1)-th sub-module to the positive input port of the M-th sub-module; and connect the negative input port of the (M+1)-th sub-module in the second group of sub-modules to the positive input port of the (M+2)-th sub-module, and connect the negative input port of the (M+2)-th sub-module to the positive input port of the (M+3)-th sub-module, until connect the negative input port of the (2M-1)-th sub-module to the positive input port of the (2M)-th sub-module; and so on, until connect the negative input port of the ((L-1)*M+1)-th sub-module in the L-th group of sub-modules to the positive input port of the ((L-1)*M+2)-th sub-module, and connect the negative input port of the ((L-1)*M+2)-th sub-module to the positive input port of the ((L-1)*M+3)-th sub-module, until connect the negative input port of the (L*M-1)-th sub-module to the positive input port of the (L*M)-th sub-module. The second parallel connection module is further configured to connect the positive input ports of the first sub-module, the (M+1)-th sub-module up to the ((L-1)*M+1)-th sub-module in parallel, and connect the negative input ports of the M-th sub-module, the (2M)-th sub-module up to the (L*M)-th sub-module in parallel. The third connecting module is further configured to: connect the positive input ports of the first sub-module, the (M+1)-th sub-module up to the ((L-1)*M+1)-th sub-module in parallel, and then connect them with the 3kV DC power supply grid; and connect the negative input ports of the M sub-module, the (2M)-th sub-module up to the (L*M)-th sub-module in parallel, and then connect them with the ground. The control unit is further configured to: under the 3kV DC railway power supply system and under the condition that the multi-system electric locomotive is in a traction operating state, the sub-modules are operated in forward DC-DC mode (i.e. boost mode); when the multi-system electric locomotive is in a regenerative braking operating state and the 3kV DC power supply grid has an capability of energy absorption, the sub-modules are operated in reverse DC-DC mode (i.e. buck mode); when the multi-system electric locomotive is in a non-regenerative braking operating state, the sub-modules are in blocking state; where the forward DC-DC mode means the electric energy flow from the input ports to the output ports, and the reverse DC-DC mode means the electric energy flows from the output ports to the input ports.

In the processing apparatus for a grid-side power converter system of a multi-system electric locomotive provided by the embodiments of the present disclosure, the third serial connection module is further configure to: close the switching component between the negative input port of the first sub-module in the first group of sub-modules and the positive input port of the second sub-module, and close the switching component between the negative input port of the second sub-module and the positive input port of the third sub-module, until close the switching component between the negative input port of the (M-1)-th sub-module and the positive input port of the M-th sub-module; close the switching component between the negative input port of the (M+1)-th sub-module in the second group of sub-modules and the positive input port of the (M+2)-th sub-module, and close the switching component between the negative input port of the (M+2)-th sub-module and the positive input port of the (M+3)-th sub-module, until close the switching component between the negative input port of the (2M-1)-th sub-module and the positive input port of the (2M)-th sub-module; and so on, until close the switching component between the negative input port of the ((L-1)*M+1)-th sub-module in the L-th group of sub-modules and the positive input port of the ((L-1)*M+2)-th sub-module, close the switching component between the negative input port of the ((L-1)*M+2)-th sub-module in the L-th group of sub-modules and the positive input port of the ((L-1)*M+3)-th sub-module, until close the switching component between the negative input port of the (L*M-1)-th sub-module in the L-th group of sub-modules and the positive input port of the (L*M)-th sub-module. The second parallel connection module is further configured to: close the switching component between the positive input port of the first sub-module and the power supply bus, close the switching component between the positive input port of the (M+1)-th sub-module and the power supply bus, until close the switching component between the positive input port of the ((L-1)*M+1)-th sub-module and the power supply bus; and close the switching component between the negative input port of the M-th sub-module and the ground bus, close the switching component between the negative input port of the (2M)-th sub-module and the ground bus, until close the switching component between the negative input port of the (L*M)-th sub-module and the ground bus. The third connecting module is further configured to close the DC switch between the power supply bus and the 3kV DC power supply grid, and always connect the ground bus with the ground.

In the processing apparatus for a grid-side power converter system of a multi-system electric locomotive provided by the embodiments of the present disclosure, if the target railway power supply system is the 1.5kV DC railway power supply system, the first connecting unit 20 includes: a third parallel connection module, configured to divide N sub-modules into P groups of sub-modules, each group of sub-modules including Q sub-modules. The input ports of the Q sub-modules in each group of sub-modules are connected in series, and all P groups of sub-modules are connected in parallel in turn, wherein the N denotes the total number of sub-modules in the grid-side converter, P is the number of groups of sub-modules, Q is the number of sub-modules included in each group of sub-modules, and N=P*Q. Because the voltage of the 1.5kV DC railway power supply system is a half of the voltage of the 3kV DC railway power supply system, P=2L, and Q=M/2.

The second connecting unit 30 includes: a fourth connecting module, configured to connect the input ports of all the sub-modules in parallel, and then connect them with the 1.5kV DC power supply grid and to the ground respectively.

Optionally, in the processing apparatus for a grid-side power converter system of a multi-system electric locomotive provided by the embodiments of the present disclosure, if the target railway power supply system is the 1.5kV DC railway power supply system, the third parallel connection module is further configured to: connect the negative input port of the first sub-module in the first group of sub-modules to the positive input port of the second sub-module, connect the negative input port of the second sub-module to the positive input port of the third sub-module, until connect the negative input port of the (Q-1)-th sub-module to the positive input port of the Q-th sub-module; connect the negative input port of the (Q+1)-th sub-module in the second group of sub-modules to the positive input port of the (Q+2)-th sub-module, connect the negative input port of the (Q+2)-th sub-module to the positive input port of the (Q+3)-th sub-module, until connect the negative input port of the (2Q-1)-th sub-module to the positive input port of the (2Q)-th sub-module; and so on, until connect the negative input port of the ((P-1)*Q+1)-th sub-module in the P-th group of sub-modules to the positive input port of the ((P-1)*Q+2)-th sub-module, connect the negative input port of the ((P-1)*Q+2)-th sub-module to the positive input port of the ((P-1)*Q+3)-th sub-module, until connect the negative input port of the (P*Q-1)-th sub-module to the positive input port of the (P*Q)-th sub-module. That the input ports between the groups of sub-modules are connected in parallel in turn includes that: the positive input ports of the first sub-module, the (Q+1)-th sub-module up to the ((P-1)*Q+1)-th sub-module are connected in parallel, and the negative input ports of the Q-th sub-module, the (2Q)-th sub-module up to the (P*Q)-th sub-module are connected in parallel. The fourth connecting module is further configured to: connect the positive input ports of the first sub-module, the (Q+1)-th sub-module up to the ((P-1)*Q+1)-th sub-module in parallel, and then connect them with the 1.5kV DC power supply grid; and connect the negative input ports of the Q sub-module, the (2Q)-th sub-module up to the (P*Q)-th sub-module in parallel, and then connect them with the ground. The control unit is further configured to: under the 1.5kV DC railway power supply system and under the condition that the multi-system electric locomotive is in a traction operating state, the sub-modules are operated in forward DC-DC mode (i.e. boost mode); when the multi-system electric locomotive is in a regenerative braking operating state and the 1.5kV DC power supply grid has an capability of energy absorption, the sub-modules are operated in reverse DC-DC mode (i.e. buck mode); when the multi-system electric locomotive is in a non-regenerative braking operating state, the sub-modules are in blocking state; where the forward DC-DC mode means the electric energy flow from the input ports to the output ports, and the reverse DC-DC mode means the electric energy flows from the output ports to the input ports.

Optionally, in the processing apparatus for a grid-side power converter system of a multi-system electric locomotive provided by the embodiments of the present disclosure, the input ports of Q sub-modules in the group of sub-modules are connected in series includes that: the switching component between the negative input port of the first sub-module in the first group of sub-modules and the positive input port of the second sub-module is closed, and the switching component between the negative input port of the second sub-module and the positive input port of the third sub-module is closed, until the switching component between the negative input port of the (Q-1)-th sub-module and the positive input port of the Q-th sub-module is closed; the switching component between the negative input port of the (Q+1)-th sub-module in the second group of sub-modules and the positive input port of the (Q+2)-th sub-module is closed, and the switching component between the negative input port of the (Q+2)-th sub-module and the positive input port of the (Q+3)-th sub-module is closed, until the switching component between the negative input port of the (2Q-1)-th sub-module and the positive input port of the (2Q)-th sub-module is closed; and so on, until the switching component between the negative input port of the ((P-1)*Q+1)-th sub-module in the P-th group of sub-modules and the positive input port of the ((P-1)*Q+2)-th sub-module is closed, the switching component between the negative input port of the ((P-1)*Q+2)-th sub-module and the positive input port of the ((P-1)*Q+3)-th sub-module is closed, until the switching component between the negative input port of the (P*Q-1)-th sub-module and the positive input port of the (P*Q)-th sub-module is closed. That the input ports between the groups of sub-modules are connected in parallel in turn includes that: the switching component between the positive input port of the first sub-module and the power supply bus is closed, the switching component between the positive input port of the (Q+1)-th sub-module and the power supply bus is closed, until the switching component between the positive input port of the ((P-1)*Q+1)-th sub-module and the power supply bus is closed; the switching component between the negative input port of the Q-th sub-module and the ground bus is closed, the switching component between the negative input port of the (2Q)-th sub-module and the ground bus is closed, until the switching component between the negative input port of the (P*Q)-th sub-module and the ground bus is closed. The fourth connecting module is further configured to close the DC switch between the power supply bus and the 15kV DC power supply grid, and always connect the ground bus with the ground.

The processing apparatus for a grid-side power converter system of a multi-system electric locomotive includes a processor and a memory. The determining unit 10, the first connecting unit 20, the second connecting unit 30, etc are stored in the memory as program units, and the processor executes these program units stored in the memory to implement corresponding functions.

The processor includes a core, and the core retrieves the corresponding program unit from the memory. There can be one or more than one core. The problems in the related technology of large volume and weight, and high manufacturing difficulty and cost of a transformer required for the grid-side power converter system of the multi-system electric locomotive are solved by adjusting core parameters.

The memory may include a volatile memory, a Random Access Memory (RAM) and/or a nonvolatile memory, and other forms in computer readable media, for example, a Read Only Memory (ROM) or a flash RAM. The memory includes at least one memory chip.

The examples of the disclosure provide a storage medium, which stores a program. When executed by a processor, the program implements the processing method for a grid-side power converter system of a multi-system electric locomotive.

The examples of the disclosure provide a processor, which is used to execute a program. When running, the program performs the processing method for a grid-side power converter system of a multi-system electric locomotive.

Those skilled in the art should understand that the embodiments of the present disclosure may be provided as a method, a system or a computer program product Thus, the present disclosure may adopt forms of complete hardware embodiments, complete software embodiments or embodiments integrating software and hardware. Moreover, the present disclosure may adopt the form of a computer program product implemented on one or more computer available storage media (including, but not limited to, a disk memory, a CD-ROM, an optical memory and the like) containing computer available program codes.

The present disclosure is described with reference to flowcharts and/or block diagrams of the method, the device (system) and the computer program product according to the embodiments of the present disclosure. It should be understood that each flow and/or block in the flowchart and/or block diagram, and the combination of the flow and/or block in the flowchart and/or block diagram can be implemented by the computer program instructions. These computer program instructions can be provided to a processor of a general-purpose computer, a special-purpose computer, an embedded processor or other programmable data processing apparatus to generate a machine, so that instructions which are executed by the processor of the computer or other programmable data processing apparatus generate a device which is used for implementing the specified functions in one or more flows of the flowchart and/or one or more blocks of the block diagram.

It is to be noted that terms "include" and "contain" or any other variant thereof is intended to cover nonexclusive inclusions herein, so that a process, method, goods or device including a series of elements not only includes those elements but also includes other elements which are not clearly listed or further includes elements intrinsic to the process, the method, the goods or the device. Under the condition of no more limitations, an element defined by the statement "including a/an....." does not exclude existence of the same other elements in a process, method, goods or device including the element.

Those skilled in the art should understand that the embodiments of the present disclosure may be provided as a method, a system or a computer program product Thus, the present disclosure may adopt forms of complete hardware embodiments, complete software embodiments or embodiments integrating software and hardware. Moreover, the present disclosure may adopt the form of a computer program product implemented on one or more computer available storage media (including, but not limited to, a disk memory, a CD-ROM, an optical memory and the like) containing computer available program codes.

## Claims

1. A processing method for a grid-side power converter system of a multi-system electric locomotive, comprising:
Determining (101) a target railway power supply system of a power supply grid for the multi-system electric locomotive:
under the target railway power supply system, connecting (102) input ports of sub-modules (SMi), each sub-module equipped with a medium-frequency transformer, in the grid-side power converter system in a target manner; and
after connecting the input ports of the sub-modules in the target manner, connecting (103) the grid-side power converter system to the railway power grid and to the ground respectively wherein the grid-side power converter system consists of: a power supply bus, a ground bus, N sub-modules and a plurality of switching components, N is an even number; each sub-module (SMi) consists of a positive input port, a negative input port, a four-quadrant converter, a medium-frequency transformer, a DC/DC converter, a positive output port and a negative output port; the positive input port of each sub-module is connected to the power supply bus through a switching component; the negative input port of each sub-module is connected to the ground bus through a switching component; and the negative input port of each sub-module is also connected to the positive input port of the next sub-module through a switching component; the negative input port of the first sub-module is connected to the positive input port of the second sub-module through Z P a switching component, and the negative input port of the second sub-module is connected to the positive input port of the third sub-module through a switching component, the configuration of each sub-module (SMi) is repeated for the subsequent sub-modules until the negative input port of the (N-1)-th sub-module is connected to the positive input port of the N-th sub-module through a switching component; the negative input port of the N-th sub-module is connected to the positive input port of the first sub-module through a switching component; and the power supply bus is connected to an Alternate Current (AC) or Direct Current (DC) power supply grid by closing an AC or DC switch;
the method **characterised in that**:
when the target railway power supply is a 25kV/50Hz railway power supply system, connecting the input ports of the sub-modules in the grid-side power converter system in the target manner comprises:
connecting the input ports of all the sub-modules in series in turn;
after connecting the input ports of the sub-modules in the target manner, connecting the grid-side power converter system to the power supply grid and to the ground respectively, comprises: after connecting the input ports of all sub-modules in series, connecting all in series connected sub-modules with the 25kV/50Hz power supply grid and to the ground respectively;
wherein after connecting the input ports of all the sub-modules (SMi) in series, connecting all in series connected sub-modules with the 25kV/50Hz power supply grid and to the ground respectively comprises: connecting the positive input port of the first sub-module to the 25kV/50Hz power supply grid, and connecting the negative input port of the N-th sub-module to the ground;
wherein when the target railway power supply system is a 15kV/16.7Hz railway power supply system, connecting the input ports of the sub-modules of the grid-side power converter system in the target manner comprises: dividing the N sub-modules into two groups, each group of sub-modules consisting of N/2 sub-modules; connecting the input ports of the N/2 sub-modules in each group of sub-modules in series in turn; and connecting the two groups of sub-modules in the input side in parallel, wherein the N denotes the total number of sub-modules in the grid-side converter;
after connecting the input ports of the sub-modules in the target manner, connecting grid-side power converter system to the power supply grid and to the ground comprises: after connecting both groups of sub-modules in input side in parallel, connecting both parallel connected groups of sub-modules to the 15kV/16.7Hz power supply grid and to the ground respectively;
wherein after connecting the both groups of sub-modules (SMi) in input side in parallel, connecting the both parallel connected groups of sub-modules to the 15kV/16.7Hz power supply grid and to the ground respectively comprises: after connecting the positive input port of the first sub-module to the positive input port of the (N/2+1)-th sub-module in parallel, connecting the positive input port of the first sub-module and the positive input port of the (N/2+1)-th sub-module to the 15kV/16.7Hz power supply grid, and after connecting the negative input port of the (N/2)-th sub-module to the negative input port of the N-th sub-module in parallel, connecting the negative input port of the (N/2)-th sub-module and the the negative input port of the N-th sub-module to the ground;
wherein when the target railway power supply system is a 3kV DC railway power supply system, connecting the input ports of the sub-modules in the grid-side power converter system in the target manner comprises: dividing the N sub-modules into L groups of sub-modules, each group of sub-modules comprising M sub-modules; connecting the input ports of the M sub-modules in each group in series, M is an even number; and connecting all L groups of sub-modules in the input side in parallel, wherein the N denotes the total number of sub-modules in the grid-side converter, the L is the number of groups of sub-modules, the M is the number of sub-modules included in each group, and N=L*M;
after connecting the input ports of the sub-modules in the target manner, connecting grid-side power converter system to the power supply grid and to the ground comprises: after connecting all L groups of sub-modules in input side in parallel, connecting all L parallel connected groups of sub-modules to the 3kV DC power supply grid and to the ground respectively;
wherein after connecting all L groups of sub-modules (SMi) in input side in parallel, connecting all L parallel connected groups of sub-modules to the 3kV DC power supply grid and to the ground respectively comprises: after parallel connecting of the positive input ports of the first sub-module, the (M+1)-th sub-module up to the ((L-1)* M+1)-th sub-module, connecting these parallel connected positive input ports to the 3kV DC power supply grid,; and after parallel connecting of the negative input ports of the M sub-module, the-th sub-module up to the (L* M)-th sub-module, connecting these parallel connected negative input ports to the ground;
wherein when the target railway power supply system is a 1.5kV DC railway power supply system,
connecting the input ports of the sub-modules in the grid-side power converter system in the target manner comprises: dividing the N sub-modules into P groups of sub-modules, each group of sub-modules comprising Q sub-modules; connecting the input ports of the Q sub-modules in each group; and connecting all P groups of sub-modules in the input side in parallel, wherein the N denotes the total number of sub-modules in the grid-side converter, the P is the number of groups of sub-modules, the Q is the number of sub-modules included in each group and N=P*Q; as the voltage of the 1.5kV DC railway power supply system is a half of the voltage of the 3kV DC railway power supply system, P=2L, and Q=M/2;
after connecting the input ports of the sub-modules in the target manner, connecting grid-side power converter system to the power supply grid and to the ground comprises: after connecting all P groups of sub-modules in input side in parallel, connecting all P parallel connected groups of sub-modules to the 1.5kV DC power supply grid and to the ground respectively;
wherein after connecting all P groups of sub-modules in input side in parallel, connecting all P parallel connected groups of sub-modules to the 1.5kV DC power supply grid and to the ground comprises: after parallel connecting the positive input ports of the first sub-module, the (Q+1)-th sub-module up to the ((P-1)*Q+1)-th sub-module, connecting these parallel connected positive input ports to the 1.5kV DC power supply grid; and after parallel connecting of the negative input ports of the Q sub-module, the (2Q)-th sub-module up to the (P*Q)-th sub-module, connecting these parallel connected negative input powers to the ground.

2. The processing method as claimed in claim 1, wherein after connecting the input ports of the sub-modules (SMi) in the target manner, and then connecting the grid-side power converter system to the railway power grid and to the ground respectively, the method further comprising:
controlling the sub-modules to work in an corresponding operating mode according to the target railway power supply system and the state of operation of the multi-system electric locomotive;
controlling the sub-module to work in the corresponding operating mode according to the target railway power supply system and the state of operation of the multi-system electric locomotive comprises: under the 25kV/50Hz railway power supply system and under the condition that the multi-system electric locomotive is in a traction operating state, the sub-modules are operated in rectifier mode; when the multi-system electric locomotive is in a regenerative braking operating state, the sub-modules are operated in inverter operating mode;
controlling the sub-module to work in the corresponding operating mode according to the target railway power supply system and the state of operation of the multi-system electric locomotive comprises: under the 15kV/16.7Hz railway power supply system and under the condition that the multi-system electric locomotive is in the traction operating state, the sub-modules are operated in the rectifier mode; when the multi-system electric locomotive is in the regenerative braking operating state, the sub-modules are operated in inverter operating mode;
controlling the sub-module to work in the corresponding operating mode according to the target railway power supply system and the state of operation of the multi-system electric locomotive comprises: under the 3kV DC railway power supply system and under the condition that the multi-system electric locomotive is in a traction operating state, the sub-modules are operated in forward DC-DC mode; when the multi-system electric locomotive is in a regenerative braking operating state and the 3kV DC power supply grid has a capability of energy absorption, the sub-modules are operated in reverse DC-DC mode; when the multi-system electric locomotive is in a non-regenerative braking operating state, the sub-modules are in blocking state; where the forward DC-DC mode means the electric energy flows from the input ports to the output ports, and the reverse DC-DC mode means the electric energy flows from the output ports to the input ports;
controlling the sub-module to work in the corresponding operating mode according to the target railway power supply system and the state of operation of the multi-system electric locomotive comprises: under the 1.5kV DC railway power supply system and under the condition that the multi-system electric locomotive is in a traction operating state, the sub-modules are operated in forward DC-DC mode; when the multi-system electric locomotive is in a regenerative braking operating state and the 1.5kV DC power supply grid has a capability of energy absorption, the sub-modules are operated in reverse DC-DC mode; when the multi-system electric locomotive is in a non-regenerative braking operating state, the sub-modules are in blocking state; where the forward DC-DC mode means the electric energy flows from the input ports to the output ports, and the reverse DC-DC mode means the electric energy flows from the output ports to the input ports.

3. The processing method as claimed in claim 1, wherein when the target railway power supply is a 25kV/50Hz railway power supply system, connecting the input ports of all sub-modules in series in turn comprises:
connecting the negative input port of the first sub-module to the positive input port of the second sub-module, and connecting the negative input port of the second sub-module to the positive input port of the third sub-module, the configuration of each sub-module (SMi) is repeated for the subsequent sub-modules until connecting the negative input port of the (N-1)-th sub-module to the positive input port of the N-th sub-module, wherein N denotes the total number of sub-modules in the grid-side converter. sub-module.

4. The processing method as claimed in claim 3, wherein connecting the input ports of all the sub-modules in series in turn comprises: closing the switching component between the negative input port of the first sub-module and the positive input port of the second sub-module, and closing the switching component between the negative input port of the second sub-module and the positive input port of the third sub-module the configuration of each sub-module (SMi) is repeated for the subsequent sub-modules until closing the switching component between the negative input port of the (N-1)-th sub-module and the positive input port of the N-th sub-module, closing the switching component between the positive input port of the first sub-module and the power supply bus, and closing the switching component between the negative input port of the N-th sub-module and the ground bus;
after connecting the input ports of all the sub-modules in series, connecting the input ports of all in series connected sub-modules to the 25kV/50Hz power supply grid and to the ground respectively, comprises: closing the AC switch between the power supply bus and the 25kV/50Hz AC power supply grid, and connecting the ground bus with the ground.

5. The processing method as claimed in claim 1, wherein when the target railway power supply system is a 15kV/16.7Hz railway power supply system, connecting the input ports of the N/2 sub-modules in each group of sub-modules in series in turn comprises: connecting the negative input port of the first sub-module to the positive input port of the second sub-module, and connecting the negative input port of the second sub-module to the positive input port of the third sub-module, the configuration of each sub-module (SMi) is repeated for the subsequent sub-modules until connecting the negative input port of the (N/2-1)-th sub-module to the positive input port of the (N/2)-th sub-module; and connecting the negative input port of the (N/2+1)-th sub-module to the positive input port of the (N/2+2)-th sub-module, and connecting the negative input port of the (N/2+2)-th sub-module to the positive input port of the (N/2+3)-th sub-module, the configuration of each sub-module (SMi) is repeated for the subsequent sub-modules until connecting the negative input port of the (N-1)-th sub-module to the positive input port of the N-th sub-module;
connecting both groups of sub-modules in input side in parallel comprises: connecting the positive input port of the first sub-module to the positive input port of the (N/2+1)-th sub-module, and connecting the negative input port of the (N/2)-th sub-module to the negative input port of the N-th sub-module.

6. The processing method as claimed in claim 5, wherein connecting the input ports of the N/2 sub-modules in each group of sub-modules in series in turn comprises: closing the switching component between the negative input port of the first sub-module and the positive input port of the second sub-module, and closing the switching component between the negative input port of the second sub-module and the positive input port of the third sub-module, the configuration of each sub-module (SMi) is repeated for the subsequent sub-modules until closing the switching component between the negative input port of the (N/2-1)-th sub-module and the positive input port of the (N/2)-th sub-module; closing the switching component between the negative input port of the (N/2+1)-th sub-module and the positive input port of the (N/2+2)-th sub-module, and closing the switching component between the negative input port of the (N/2+2)-th sub-module and the positive input port of the (N/2+3)-th sub-module, the configuration of each sub-module is repeated for the subsequent sub-modules until closing the switching component between the negative input port of the (N-1)-th sub-module and the positive input port of the N-th sub-module;
connecting the input ports of both groups of sub-modules in parallel comprises: closing the switching component between the positive input port of the first sub-module and the power supply bus, and closing the switching component between the positive input port of the (N/2+1) sub-module and the power supply bus; closing the switching component between the negative input port of the (N/2) sub-module and the ground bus, and closing the switching component between the negative input port of the N-th sub-module and the ground bus;
after connecting both groups of sub-modules in input side in parallel, connecting the both parallel connected groups of sub-modules to the 15kV/16.7Hz power supply grid and to the ground respectively to the 15kV/16.7Hz power supply grid and to the ground comprises: closing the AC switch between the power supply bus and the 15kV/16.7Hz AC power supply grid, and always connecting the ground bus with the ground.

7. The processing method as claimed in claim 1, wherein when the target railway power supply system is a 3kV DC railway power supply system, connecting the input ports of the M sub-modules in each group of sub-modules in series comprises: connecting the negative input port of the first sub-module in the first group of sub-modules to the positive input port of the second sub-module, and connecting the negative input port of the second sub-module to the positive input port of the third sub-module, until connecting the negative input port of the (M-1)-th sub-module to the positive input port of the M-th sub-module; connecting the negative input port of the (M+1)-th sub-module in the second group of sub-modules to the positive input port of the (M+2)-th sub-module, and connecting the negative input port of the (M+2)-th sub-module to the positive input port of the (M+3)-th sub-module, the configuration of each sub-module (SMi) is repeated for the subsequent sub-modules until connecting the negative input port of the (2M-1)-th sub-module to the positive input port of the (2M)-th sub-module; until connecting the negative input port of the ((L-1)*M+1)-th sub-module in the L-th group of sub-modules to the positive input port of the ((L-1)*M+2)-th sub-module, and connecting the negative input port of the ((L-1)*M+2)-th sub-module to the positive input port of the ((L-1)*M+3)-th sub-module, until connecting the negative input port of the (L*M-1)-th sub-module to the positive input port of the (L*M)-th sub-module;
connecting all L groups of sub-modules in the input side in parallel comprises: connecting the positive input ports of the first sub-module, the (M+1)-th sub-module up to the ((L-1)*M+1)-th sub-module in parallel, and connecting the negative input ports of the M-th sub-module, the (2M)-th sub-module up to the (L*M)-th sub-module in parallel.

8. The processing method as claimed in claim 7, wherein connecting the input ports of the M sub-modules in each group of sub-modules in series comprises: closing the switching component between the negative input port of the first sub-module in the first group of sub-modules and the positive input port of the second sub-module, and closing the switching component between the negative input port of the second sub-module and the positive input port of the third sub-module, the configuration of each sub-module (SMi) is repeated for the subsequent sub-modules until closing the switching component between the negative input port of the (M-1)-th sub-module and the positive input port of the M-th sub-module; closing the switching component between the negative input port of the (M+1)-th sub-module in the second group of sub-modules and the positive input port of the (M+2)-th sub-module, and closing the switching component between the negative input port of the (M+2)-th sub-module and the positive input port of the (M+3)-th sub-module, the configuration of each sub-module is repeated for the subsequent sub-modules until closing the switching component between the negative input port of the (2M-1)-th sub-module and the positive input port of the (2M)-th sub-module;
the configuration of each sub-module is repeated for the subsequent sub-modules until closing the switching component between the negative input port of the ((L-1)*M+1)-th sub-module in the L-th group of sub-modules and the positive input port of the ((L-1)*M+2)-th sub-module, closing the switching component between the negative input port of the ((L-1)*M+2)-th sub-module in the L-th group of sub-modules and the positive input port of the ((L-1)*M+3)-th sub-module,
the configuration of each sub-module is repeated for the subsequent sub-modules until closing the switching component between the negative input port of the (L*M-1)-th sub-module in the L-th group of sub-modules and the positive input port of the (L*M)-th sub-module;
connecting all L groups of sub-modules in the input side in parallel comprises: closing the switching component between the positive input port of the first sub-module and the power supply bus, closing the switching component between the positive input port of the (M+1)-th sub-module and the power supply bus, the configuration of each sub-module is repeated for the subsequent sub-modules until closing the switching component between the positive input port of the ((L-1)*M+1)-th sub-module and the power supply bus; closing the switching component between the negative input port of the M-th sub-module and the ground bus, closing the switching component between the negative input port of the (2M)-th sub-module and the ground bus, the configuration of each sub-module is repeated for the subsequent sub-modules until closing the switching component between the negative input port of the (L*M)-th sub-module and the ground bus;
after connecting all L groups of sub-modules in input side in parallel, connecting all L parallel connected groups of sub-modules to the 3kV DC power supply grid and to the ground respectively comprises: closing the DC switch between the power supply bus and the 3kV DC power supply grid, and always connecting the ground bus with the ground.

9. The processing method as claimed in claim 1, wherein when the target railway power supply system is the 1.5kV DC railway power supply system,
connecting the input ports of the Q sub-modules in the group of sub-modules in series comprises:
connecting the negative input port of the first sub-module in the first group of sub-modules to the positive input port of the second sub-module, connecting the negative input port of the second sub-module to the positive input port of the third sub-module, the configuration of each sub-module (SMi) is repeated for the subsequent sub-modules until connecting the negative input port of the (Q-1)-th sub-module to the positive input port of the Q-th sub-module; connecting the negative input port of the (Q+1)-th sub-module in the second group of sub-modules to the positive input port of the (Q+2)-th sub-module,
connecting the negative input port of the (Q+2)-th sub-module to the positive input port of the (Q+3)-th sub-module, until connecting the negative input port of the (2Q-1)-th sub-module to the positive input port of the (2Q)-th sub-module; the configuration of each sub-module is repeated for the subsequent sub-modules until connecting the negative input port of the ((P-1)*Q+1)-th sub-module in the P-th group of sub-modules to the positive input port of the ((P-1)*Q+2)-th sub-module, connecting the negative input port of the ((P-1)*Q+2)-th sub-module to the positive input port of the ((P-1)*Q+3)-th sub-module, the configuration of each sub-module is repeated for the subsequent sub-modules until connecting the negative input port of the (P*Q-1)-th sub-module to the positive input port of the (P*Q)-th sub-module;
connecting all P groups of sub-modules in the input side in parallel comprises: connecting the positive input ports of the first sub-module, the (Q+1)-th sub-module up to the ((P-1)*Q+1)-th sub-module in parallel, and connecting the negative input ports of the Q-th sub-module, the (2Q)-th sub-module up to the (P*Q)-th sub-module in parallel.

10. The processing method as claimed in claim 9, wherein:
connecting the input ports of the Q sub-modules in the group of sub-modules in series comprises:
closing the switching component between the negative input port of the first sub-module in the first group of sub-modules and the positive input port of the second sub-module, and closing the switching component between the negative input port of the second sub-module and the positive input port of the third sub-module, the configuration of each sub-module (SMi) is repeated for the subsequent sub-modules until closing the switching component between the negative input port of the (Q-1)-th sub-module and the positive input port of the Q-th sub-module; closing the switching component between the negative input port of the (Q+1)-th sub-module in the second group of sub-modules and the positive input port of the (Q+2)-th sub-module, and closing the switching component between the negative input port of the (Q+2)-th sub-module and the positive input port of the (Q+3)-th sub-module, the configuration of each sub-module is repeated for the subsequent sub-modules until closing the switching component between the negative input port of the (2Q-1)-th sub-module and the positive input port of the (2Q)-th sub-module; the configuration of each sub-module is repeated for the subsequent sub-modules until closing the switching component between the negative input port of the ((P-1)*Q+1)-th sub-module in the P-th group of sub-modules and the positive input port of the ((P-1)*Q+2)-th sub-module, closing the switching component between the negative input port of the ((P-1)*Q+2)-th sub-module and the positive input port of the ((P-1)*Q+3)-th sub-module, the configuration of each sub-module is repeated for the subsequent sub-modules until closing the switching component between the negative input port of the (P*Q-1)-th sub-module and the positive input port of the (P*Q)-th sub-module;
connecting all P groups of sub-modules in the input side in parallel comprises: closing the switching component between the positive input port of the first sub-module and the power supply bus, closing the switching component between the positive input port of the (Q+1)-th sub-module and the power supply bus, the configuration of each sub-module (SMi) is repeated for the subsequent sub-modules until closing the switching component between the positive input port of the ((P-1)*Q+1)-th sub-module and the power supply bus; closing the switching component between the negative input port of the Q-th sub-module and the ground bus, closing the switching component between the negative input port of the (2Q)-th sub-module and the ground bus, the configuration of each sub-module is repeated for the subsequent sub-modules until closing the switching component between the negative input port of the (P*Q)-th sub-module and the ground bus;
after connecting all P groups of sub-modules in input side in parallel, connecting all P parallel connected groups of sub-modules to the 3kV DC power supply grid and to the ground respectively comprises: closing the DC switch between the power supply bus and the 1.5kV DC power supply grid, and connecting the ground bus with the ground

11. A grid-side power converter system of a multi-system electric locomotive comprising a processing apparatus, said processing apparatus comprising:
a determining unit (10), configured to determine a target railway power supply system of a power supply grid for the multi-system electric locomotive;
a first connecting unit (20), configured to, under the target railway power supply system, connect input ports of sub-modules (SMi), each sub-module equipped with a medium-frequency transformer, in the grid-side power converter system in a target manner; and
a second connecting unit (30), configured to, after connecting the input ports of the sub-modules in the target manner, connect the grid-side power converter system to the railway power supply grid and to the ground respectively
wherein the grid-side power converter system comprises: a power supply bus, a ground bus, N sub-modules and a plurality of switching components; each sub-module consists of a positive input port, a negative input port, a four-quadrant converter, a medium-frequency transformer, a DC/DC converter, a positive output port and a negative output port; the positive input port of each sub-module is connected to the power supply bus through a switching component; the negative input port of each sub-module is connected to the ground bus through a switching component; and the negative input port of each sub-module is also connected to the positive input port of the next sub-module through a switching component; the negative input port of the first sub-module is connected to the positive input port of the second sub-module through a switching component, and the negative input port of the second sub-module is connected to the positive input port of the third sub-module through a switching component, the configuration of each sub-module (SMi) is repeated for the subsequent sub-modules until the negative input port of the (N-1)-th sub-module is connected to the positive input port of the N-th sub-module through a switching component; the negative input port of the N-th sub-module is connected to the positive input port of the first sub-module through a switching component; and the power supply bus is connected to an Alternate Current (AC) or Direct Current (DC) power supply grid by closing an AC or DC switch; the grid-side power converter system **characterised in that** it further comprises:
a first serial connection module, configured to connect the input ports of all the sub-modules in series in turn, if the target railway power supply system is a 25kV/50Hz railway power supply system;
a first connecting module, configured to connect all in series connected sub-modules with the 25kV/50Hz power supply grid and to the ground respectively after connecting the input ports of all sub-modules in series;
a first grouping module, configured to divide N sub-modules into two groups, group of sub-modules consisting of N/2 sub-modules if the target railway power supply system is a 15kV/16.7Hz railway power supply system;
a second serial connection module, configured to connect the input ports of the N/2 sub-modules in each group of sub-modules in series in turn;
a first parallel connection module, configured to connect the two groups of sub-modules in the input side in parallel, wherein the N denotes the total number of sub-modules in the grid-side converter;
a second connecting module, configured to connect the both groups of sub-modules in input side in parallel and connect the both parallel connected groups of sub-modules to the 15kV/16.7Hz power supply grid and the ground respectively;
a second grouping module, configured to divide the N sub-modules into L groups of sub-modules, each group of sub-modules including M sub-modules when the target railway power supply system is a 3kV DC railway power supply system;
a third serial connection module, configured to connect the input ports of the M sub-modules in each group in series;
a second parallel connection module, configured to connect all L groups of sub-modules in parallel in turn, wherein the N denotes the total number of sub-modules in the grid-side converter, L is the number of groups of sub-modules, M is the number of sub-modules included in each group, and N=L*M;
a third connecting module, configured to connect the input ports between the groups of sub-modules in parallel in turn, and connect the input ports with the 3kV DC power supply grid and to the ground respectively;
a third parallel connection module, configured to divide N sub-modules into P groups of sub-modules, each group of sub-modules including Q sub-modules if the target railway power supply system is a 1.5kV DC railway power supply system;
wherein the input ports of the Q sub-modules in each group of sub-modules are connected in series, and all P groups of sub-modules are connected in parallel in turn, wherein the N denotes the total number of sub-modules in the grid-side converter, P is the number of groups of sub-modules, Q is the number of sub-modules included in each group of sub-modules, and N=P*Q as the voltage of the 1.5kV DC railway power supply system is a half of the voltage of the 3kV DC railway power supply system, P=2L, and Q=M/2;
wherein the second connecting unit (30) comprises a fourth connecting module, configured to connect the input ports of all the sub-modules in parallel, and connect the input ports of all the sub-modules with the 1.5kV DC power supply grid and the ground respectively;
the first serial connection module is configured to, when the target railway power supply is a 25kV/50Hz railway power supply system, and defining the target manner, connect the positive input port of the first sub-module with the 25kV/50Hz power supply grid, and connect the negative input port of the N-th sub-module with the ground;
the second connecting module is configured to, when the target railway power supply is a 15kV/16.7Hz railway power supply system, and defining the target manner, connect the positive input port of the first sub-module and the positive input port of the (N/2+1)-th sub-module to the 15kV/16.7Hz power supply grid after connect the positive input port of the first sub-module to the positive input port of the (N/2+1)-th sub-module in parallel;
the second connecting module is configured to connect the negative input port of the (N/2)-th sub-module and the negative input port of the N-th sub-module to the ground and after connect the negative input port of the (N/2)-th sub-module to the negative input port of the N-th sub-module in parallel;
the third connecting module is configured to, when the target railway power supply is a 3kV DC railway power supply system, and defining the target manner, connect these parallel connected positive input ports to the 3kV DC power supply grid after parallel connecting of the positive input ports of the first sub-module, the (M+1)-th sub-module up to the ((L-1)*M+1)-th sub-module;
the third connecting module is configured to connect these parallel connected negative input powers to the ground after parallel connecting of the negative input ports of the M sub-module, the (2M)-th sub-module up to the (L*M)-th sub-module;
the third parallel connection module is configured to, when the target railway power supply is a 1.5kV DC railway power supply system, and defining the target manner, connect these parallel connected positive input ports to the 1.5kV DC power supply grid after parallel connecting the positive input ports of the first sub-module, the (Q+1)-th sub-module up to the ((P-1)*Q+1)-th sub-module;
the third parallel connection module is configured to connect these parallel connected negative input ports to the ground after parallel connecting of the negative input ports of the Q sub-module, the (2Q)-th sub-module up to the (P*Q)-th sub-module;
the switching component is one of the plurality of switching components;
the first/second/third sub-modules are sub-modules among the N sub-modules;
the AC or DC switch is part of the grid-side power converter system:
N is an even number, M is an even number.

12. The grid-side power converter system as claimed in claim 11, the processing apparatus further comprising:
a control unit, configured to, after connecting the input ports of the sub-modules in the target manner, and then connecting the grid-side power converter system to the railway power grid and to the ground respectively, control the sub-modules to work in an operating mode according to the target railway power supply system and the state of operation of the multi-system electric locomotive;
the control unit is further configured to, under the 25kV/50Hz railway power supply system and under the condition that the multi-system electric locomotive is in a traction operating state, the sub-modules are operated in rectifier mode; when the multi-system electric locomotive is in a regenerative braking operating state, the sub-modules are operated in inverter operating mode;
the control unit is further configured to under the 15kV/16.7Hz railway power supply system and under the condition that the multi-system electric locomotive is in the traction operating state, control the sub-module to choose the rectifier mode, and when the multi-system electric locomotive is in the regenerative braking operating state, the sub-modules are operated in inverter operating mode;
the control unit is further configured to: under the 3kV DC railway power supply system and under the condition that the multi-system electric locomotive is in a traction operating state, the sub-modules are operated in forward DC-DC mode (i.e. boost mode); when the multi-system electric locomotive is in a regenerative braking operating state and the 3kV DC power supply grid has an capability of energy absorption, the sub-modules are operated in reverse DC-DC mode (i.e. buck mode); when the multi-system electric locomotive is in a non-regenerative braking operating state, the sub-modules are in blocking state; where the forward DC-DC mode means the electric energy flows from the input ports to the output ports, and the reverse DC-DC mode means the electric energy flows from the output ports to the input ports;
the control unit is further configured to: under the 1.5kV DC railway power supply system and under the condition that the multi-system electric locomotive is in a traction operating state, the sub-modules are operated in forward DC-DC mode (i.e. boost mode); when the multi-system electric locomotive is in a regenerative braking operating state and the 1.5kV DC power supply grid has a capability of energy absorption, the sub-modules are operated in reverse DC-DC mode (i.e. buck mode); when the multi-system electric locomotive is in a non-regenerative braking operating state, the sub-modules are in blocking state; where the forward DC-DC mode means the electric energy flows from the input ports to the output ports, and the reverse DC-DC mode means the electric energy flows from the output ports to the input ports;
the first connecting module is further configured to connect the positive input port of the first sub-module with the 25kV/50Hz power supply grid, and connect the negative input port of the N-th sub-module with the ground;
the second connecting module is further configured to connect the positive input port of the first sub-module to the positive input port of the (N/2+1)-th sub-module in parallel, and then connect them with the 15kV/16.7Hz power supply grid, and connect the negative input port of the (N/2)-th sub-module with the negative input port of the N-th sub-module in parallel, and then connect them with the ground;
the third connecting module is further configured to: connect the positive input ports of the first sub-module, the (M+1)-th sub-module up to the ((L-1)*M+1)-th sub-module in parallel, and then connect them with the 3kV DC power supply grid; and connect the negative input ports of the M sub-module, the (2M)-th sub-module up to the (L*M)-th sub-module in parallel, and then connect them with the ground;
the fourth connecting module is further configured to: connect the positive input ports of the first sub-module, the (Q+1)-th sub-module up to the ((P-1)*Q+1)-th sub-module in parallel, and then connect them with the 1.5kV DC power supply grid; and connect the negative input ports of the Q sub-module, the (2Q)-th sub-module up to the (P*Q)-th sub-module in parallel, and then connect them with the ground.

## Patentansprüche

1. Verarbeitungsverfahren für ein netzseitiges Leistungswandlersystem einer elektrischen Mehrsystemlokomotive, umfassend:
Bestimmen (101) eines Ziel-Eisenbahnleistungsversorgungssystems eines Leistungsversorgungsnetzes für die elektrische Mehrsystemlokomotive;
unter dem Ziel-Eisenbahnleistungsversorgungssystem Verbinden (102) von Eingangsanschlüssen von Untermodulen (SMi), wobei jedes Untermodul mit einem Mittelfrequenztransformator ausgestattet ist, in dem netzseitigen Leistungswandlersystem auf eine Zielweise; und
nach dem Verbinden der Eingangsanschlüsse der Untermodule auf die Zielweise Verbinden (103) des netzseitigen Leistungswandlersystems mit dem Eisenbahnleistungsnetz bzw. mit der Masse,
wobei das netzseitige Leistungswandlersystem aus Folgendem besteht: einem Leistungsversorgungsbus, einem Massebus, N Untermodulen und einer Vielzahl von Schaltkomponenten, wobei N eine gerade Zahl ist; wobei jedes Untermodul (SMi) aus einem positiven Eingangsanschluss, einem negativen Eingangsanschluss, einem Vierquadrantenwandler, einem Mittelfrequenztransformator, einem DC/DC-Wandler, einem positiven Ausgangsanschluss und einem negativen Ausgangsanschluss besteht; wobei der positive Eingangsanschluss jedes Untermoduls durch eine Schaltkomponente mit dem Leistungsversorgungsbus verbunden ist; wobei der negative Eingangsanschluss jedes Untermoduls durch eine Schaltkomponente mit dem Massebus verbunden ist; und wobei der negative Eingangsanschluss jedes Untermoduls zudem durch eine Schaltkomponente mit dem positiven Eingangsanschluss des nächsten Untermoduls verbunden ist; wobei der negative Eingangsanschluss des ersten Untermoduls durch eine Schaltkomponente mit dem positiven Eingangsanschluss des zweiten Untermoduls verbunden ist und der negative Eingangsanschluss des zweiten Untermoduls durch eine Schaltkomponente mit dem positiven Eingangsanschluss des dritten Untermoduls verbunden ist, wobei die Konfiguration jedes Untermoduls (SMi) für die nachfolgenden Untermodule wiederholt wird, bis der negative Eingangsanschluss des (N-1)-ten Untermoduls durch eine Schaltkomponente mit dem positiven Eingangsanschluss des N-ten Untermoduls verbunden ist; wobei der negative Eingangsanschluss des N-ten Untermoduls durch eine Schaltkomponente mit dem positiven Eingangsanschluss des ersten Untermoduls verbunden ist; und wobei der Leistungsversorgungsbus durch Schließen eines AC- oder DC-Schalters mit einem Wechselstrom(AC)- oder Gleichstrom(DC)-Leistungsversorgungsnetz verbunden wird;
wobei das Verfahren **dadurch gekennzeichnet ist, dass**:
wenn die Ziel-Eisenbahnleistungsversorgung ein Eisenbahnleistungsversorgungssystem mit 25 kV/50 Hz ist, das Verbinden der Eingangsanschlüsse der Untermodule in dem netzseitigen Leistungswandlersystem auf die Zielweise Folgendes umfasst:
Verbinden der Eingangsanschlüsse aller Untermodule in Reihe nacheinander;
wobei nach dem Verbinden der Eingangsanschlüsse der Untermodule auf die Zielweise das Verbinden des netzseitigen Leistungswandlersystems mit dem Leistungsversorgungsnetz bzw. mit der Masse Folgendes umfasst: nach dem Verbinden der Eingangsanschlüsse aller Untermodule in Reihe Verbinden aller in Reihe verbundenen Untermodule mit dem Leistungsversorgungsnetz mit 25 kV/50 Hz bzw. mit der Masse;
wobei nach dem Verbinden der Eingangsanschlüsse aller Untermodule (SMi) in Reihe das Verbinden aller in Reihe verbundenen Untermodule mit dem Leistungsversorgungsnetz mit 25 kV/50 Hz bzw. mit der Masse Folgendes umfasst: Verbinden des positiven Eingangsanschlusses des ersten Untermoduls mit dem Leistungsversorgungsnetz mit 25 kV/50 Hz und Verbinden des negativen Eingangsanschlusses des N-ten Untermoduls mit der Masse;
wobei, wenn das Ziel-Eisenbahnleistungsversorgungssystem ein Eisenbahnleistungsversorgungssystem mit 15 kV/16,7 Hz ist, das Verbinden der Eingangsanschlüsse der Untermodule des netzseitigen Leistungswandlersystems auf die Zielweise Folgendes umfasst: Unterteilen der N Untermodule in zwei Gruppen, wobei jede Gruppe von Untermodulen aus N/2 Untermodulen besteht; Verbinden der Eingangsanschlüsse der N/2 Untermodule in jeder Gruppe von Untermodulen in Reihe nacheinander; und Parallelverbinden der zwei Gruppen von Untermodulen auf der Eingangsseite, wobei das N die Gesamtanzahl von Untermodulen in dem netzseitigen Wandler bezeichnet;
wobei nach dem Verbinden der Eingangsanschlüsse der Untermodule auf die Zielweise das Verbinden des netzseitigen Leistungswandlersystems mit dem Leistungsversorgungsnetz und mit der Masse Folgendes umfasst: nach dem Parallelverbinden beider Gruppen von Untermodulen auf der Eingangsseite Verbinden beider parallel verbundenen Gruppen von Untermodulen mit dem Leistungsversorgungsnetz mit 15 kV/16,7 Hz bzw. mit der Masse;
wobei nach dem Parallelverbinden der beiden Gruppen von Untermodulen (SMi) auf der Eingangsseite das Verbinden der beiden parallel verbundenen Gruppen von Untermodulen mit dem Leistungsversorgungsnetz mit 15 kV/16,7 Hz bzw. mit der Masse Folgendes umfasst: nach Parallelverbinden des positiven Eingangsanschlusses des ersten Untermoduls mit dem positiven Eingangsanschluss des (N/2+1)-ten Untermoduls Verbinden des positiven Eingangsanschlusses des ersten Untermoduls und des positiven Eingangsanschlusses des (N/2+1)-ten Untermoduls mit dem Leistungsversorgungsnetz mit 15 kV/16,7 Hz und nach Parallelverbinden des negativen Eingangsanschlusses des (N/2)-ten Untermoduls mit dem negativen Eingangsanschluss des N-ten Untermoduls Verbinden des negativen Eingangsanschlusses des (N/2)-ten Untermoduls und des negativen Eingangsanschlusses des N-ten Untermoduls mit der Masse;
wobei, wenn das Ziel-Eisenbahnleistungsversorgungssystem ein DC-Eisenbahnleistungsversorgungssystem mit 3 kV ist, das Verbinden der Eingangsanschlüsse der Untermodule in dem netzseitigen Leistungswandlersystem auf die Zielweise Folgendes umfasst: Unterteilen der N Untermodule in L Gruppen von Untermodulen, wobei jede Gruppe von Untermodulen M Untermodule umfasst; Verbinden der Eingangsanschlüsse der M Untermodule in jeder Gruppe in Reihe, wobei M eine gerade Zahl ist; und Parallelverbinden aller L Gruppen von Untermodulen auf der Eingangsseite, wobei das N die Gesamtanzahl von Untermodulen in dem netzseitigen Wandler bezeichnet, das L die Anzahl von Gruppen von Untermodulen ist, das M die Anzahl von Untermodulen ist, die in jeder Gruppe eingeschlossen ist, und N=L*M;
wobei nach dem Verbinden der Eingangsanschlüsse der Untermodule auf die Zielweise das Verbinden des netzseitigen Leistungswandlersystems mit dem Leistungsversorgungsnetz und mit der Masse Folgendes umfasst: nach dem Parallelverbinden aller L Gruppen von Untermodulen auf der Eingangsseite Verbinden aller L parallel verbundenen Gruppen von Untermodulen mit dem DC-Leistungsversorgungsnetz mit 3 kV bzw. mit der Masse;
wobei nach dem Parallelverbinden aller L Gruppen von Untermodulen (SMi) auf der Eingangsseite das Verbinden aller L parallel verbundenen Gruppen von Untermodulen mit dem DC-Leistungsversorgungsnetz mit 3 kV bzw. mit der Masse Folgendes umfasst: nach Parallelverbinden der positiven Eingangsanschlüsse des ersten Untermoduls, des (M+1)-ten Untermoduls bis zum ((L-1)*M+1)-ten Untermodul Verbinden dieser parallel verbundenen positiven Eingangsanschlüsse mit dem DC-Leistungsversorgungsnetz mit 3 kV; und nach Parallelverbinden der negativen Eingangsanschlüsse des M Untermoduls, des -ten Untermoduls bis zum (L*M)-ten Untermodul Verbinden dieser parallel verbundenen negativen Eingangsanschlüsse mit der Masse;
wobei, wenn das Ziel-Eisenbahnleistungsversorgungssystem ein DC-Eisenbahnleistungsversorgungssystem mit 1,5 kV ist,
das Verbinden der Eingangsanschlüsse der Untermodule in dem netzseitigen Leistungswandlersystem auf die Zielweise Folgendes umfasst: Unterteilen der N Untermodule in P Gruppen von Untermodulen, wobei jede Gruppe von Untermodulen Q Untermodule umfasst; Verbinden der Eingangsanschlüsse der Q Untermodule in jeder Gruppe; und Parallelverbinden aller P Gruppen von Untermodulen auf der Eingangsseite, wobei das N die Gesamtanzahl von Untermodulen in dem netzseitigen Wandler bezeichnet, das P die Anzahl von Gruppen von Untermodulen ist, das Q die Anzahl von Untermodulen ist, die in jeder Gruppe eingeschlossen ist, und N=P*Q; wobei, da die Spannung des DC-Eisenbahnleistungsversorgungssystem mit 1,5 kV eine Hälfte der Spannung des DC-Eisenbahnleistungsversorgungssystems mit 3 kV ist, P=2L und Q=M/2;
wobei nach dem Verbinden der Eingangsanschlüsse der Untermodule auf die Zielweise das Verbinden des netzseitigen Leistungswandlersystems mit dem Leistungsversorgungsnetz und mit der Masse Folgendes umfasst: nach dem Parallelverbinden aller P Gruppen von Untermodulen auf der Eingangsseite Verbinden aller P parallel verbundenen Gruppen von Untermodulen mit dem DC-Leistungsversorgungsnetz mit 1,5 kV bzw. mit der Masse;
wobei nach dem Parallelverbinden aller P Gruppen von Untermodulen auf der Eingangsseite das Verbinden aller P parallel verbundenen Gruppen von Untermodulen mit dem DC-Leistungsversorgungsnetz mit 1,5 kV bzw. mit der Masse Folgendes umfasst: nach Parallelverbinden der positiven Eingangsanschlüsse des ersten Untermoduls, des (Q+1)-ten Untermoduls bis zum ((P-1)*Q+1)-ten Untermodul Verbinden dieser parallel verbundenen positiven Eingangsanschlüsse mit dem DC-Leistungsversorgungsnetz mit 1,5 kV; und nach Parallelverbinden der negativen Eingangsanschlüsse des Q Untermoduls, des (2Q)-ten Untermoduls bis zum (P*Q)-ten Untermodul Verbinden dieser parallel verbundenen negativen Eingangsleistungen mit der Masse.

2. Verarbeitungsverfahren nach Anspruch 1, wobei nach dem Verbinden der Eingangsanschlüsse der Untermodule (SMi) auf die Zielweise und dann Verbinden des netzseitigen Leistungswandlersystems mit dem Eisenbahnleistungsnetz bzw. mit der Masse das Verfahren ferner Folgendes umfasst:
Steuern der Untermodule dahingehend, dass sie in einem entsprechenden Betriebsmodus gemäß dem Ziel-Eisenbahnleistungsversorgungssystem und dem Betriebszustand der elektrischen Mehrsystemlokomotive arbeiten;
wobei das Steuern der Untermodule dahingehend, dass sie in dem entsprechenden Betriebsmodus gemäß dem Ziel-Eisenbahnleistungsversorgungssystem und dem Betriebszustand der elektrischen Mehrsystemlokomotive arbeiten, Folgendes umfasst: dass unter dem Eisenbahnleistungsversorgungssystem mit 25 kV/50 Hz und unter der Bedingung, dass sich die elektrische Mehrsystemlokomotive in einem Traktionsbetriebszustand befindet, die Untermodule in einem Gleichrichtermodus betrieben werden; dass, wenn sich die elektrische Mehrsystemlokomotive in einem Nutzbremsbetriebszustand befindet, die Untermodule in einem Wechselrichterbetriebsmodus betrieben werden;
wobei das Steuern der Untermodule dahingehend, dass sie in dem entsprechenden Betriebsmodus gemäß dem Ziel-Eisenbahnleistungsversorgungssystem und dem Betriebszustand der elektrischen Mehrsystemlokomotive arbeiten, Folgendes umfasst: dass unter dem Eisenbahnleistungsversorgungssystem mit 15 kV/16,7 Hz und unter der Bedingung, dass sich die elektrische Mehrsystemlokomotive in dem Traktionsbetriebszustand befindet, die Untermodule in dem Gleichrichtermodus betrieben werden; dass, wenn sich die elektrische Mehrsystemlokomotive in dem Nutzbremsbetriebszustand befindet, die Untermodule in einem Wechselrichterbetriebsmodus betrieben werden;
wobei das Steuern der Untermodule dahingehend, dass sie in dem entsprechenden Betriebsmodus gemäß dem Ziel-Eisenbahnleistungsversorgungssystem und dem Betriebszustand der elektrischen Mehrsystemlokomotive arbeiten, Folgendes umfasst: dass unter dem DC-Eisenbahnleistungsversorgungssystem mit 3 kV und unter der Bedingung, dass sich die elektrische Mehrsystemlokomotive in einem Traktionsbetriebszustand befindet, die Untermodule in einem Vorwärts-DC-DC-Modus betrieben werden; dass, wenn sich die elektrische Mehrsystemlokomotive in einem Nutzbremsbetriebszustand befindet und das DC-Leistungsversorgungsnetz mit 3 kV eine Fähigkeit zur Energieabsorption aufweist, die Untermodule in einem Rückwärts-DC-DC-Modus betrieben werden; dass, wenn sich die elektrische Mehrsystemlokomotive in einem Nicht-Nutzbremsbetriebszustand befindet, sich die Untermodule in einem Blockierzustand befinden; wobei der Vorwärts-DC/DC-Modus bedeutet, dass die elektrische Energie von den Eingangsanschlüssen zu den Ausgangsanschlüssen fließt, und der Rückwärts-DC/DC-Modus bedeutet, dass die elektrische Energie von den Ausgangsanschlüssen zu den Eingangsanschlüssen fließt;
wobei das Steuern der Untermodule dahingehend, dass sie in dem entsprechenden Betriebsmodus gemäß dem Ziel-Eisenbahnleistungsversorgungssystem und dem Betriebszustand der elektrischen Mehrsystemlokomotive arbeiten, Folgendes umfasst: dass unter dem DC-Eisenbahnleistungsversorgungssystem mit 1,5 kV und unter der Bedingung, dass sich die elektrische Mehrsystemlokomotive in einem Traktionsbetriebszustand befindet, die Untermodule in einem Vorwärts-DC-DC-Modus betrieben werden; dass, wenn sich die elektrische Mehrsystemlokomotive in einem Nutzbremsbetriebszustand befindet und das DC-Leistungsversorgungsnetz mit 1,5 kV eine Fähigkeit zur Energieabsorption aufweist, die Untermodule in einem Rückwärts-DC-DC-Modus betrieben werden; dass, wenn sich die elektrische Mehrsystemlokomotive in einem Nicht-Nutzbremsbetriebszustand befindet, sich die Untermodule in einem Blockierzustand befinden; wobei der Vorwärts-DC/DC-Modus bedeutet, dass die elektrische Energie von den Eingangsanschlüssen zu den Ausgangsanschlüssen fließt, und der Rückwärts-DC/DC-Modus bedeutet, dass die elektrische Energie von den Ausgangsanschlüssen zu den Eingangsanschlüssen fließt.

3. Verarbeitungsverfahren nach Anspruch 1, wobei, wenn die Ziel-Eisenbahnleistungsversorgung ein Eisenbahnleistungsversorgungssystem mit 25 kV/50 Hz ist, das Verbinden der Eingangsanschlüsse aller Untermodule in Reihe nacheinander Folgendes umfasst:
Verbinden des negativen Eingangsanschlusses des ersten Untermoduls mit dem positiven Eingangsanschluss des zweiten Untermoduls und Verbinden des negativen Eingangsanschlusses des zweiten Untermoduls mit dem positiven Eingangsanschluss des dritten Untermoduls, wobei die Konfiguration jedes Untermoduls (SMi) für die nachfolgenden Untermodule wiederholt wird bis zum Verbinden des negativen Eingangsanschlusses des (N-1)-ten Untermoduls mit dem positiven Eingangsanschluss des N-ten Untermoduls, wobei N die Gesamtanzahl von Untermodulen in dem netzseitigen Wandler bezeichnet. Untermodul.

4. Verarbeitungsverfahren nach Anspruch 3, wobei das Verbinden der Eingangsanschlüsse aller Untermodule in Reihe nacheinander Folgendes umfasst: Schließen der Schaltkomponente zwischen dem negativen Eingangsanschluss des ersten Untermoduls und dem positiven Eingangsanschluss des zweiten Untermoduls und Schließen der Schaltkomponente zwischen dem negativen Eingangsanschluss des zweiten Untermoduls und dem positiven Eingangsanschluss des dritten Untermoduls, wobei die Konfiguration jedes Untermoduls (SMi) für die nachfolgenden Untermodule wiederholt wird bis zum Schließen der Schaltkomponente zwischen dem negativen Eingangsanschluss des (N-1)-ten Untermoduls und dem positiven Eingangsanschluss des N-ten Untermoduls, Schließen der Schaltkomponente zwischen dem positiven Eingangsanschluss des ersten Untermoduls und dem Leistungsversorgungsbus und Schließen der Schaltkomponente zwischen dem negativen Eingangsanschluss des N-ten Untermoduls und dem Massebus;
wobei nach dem Verbinden der Eingangsanschlüsse aller Untermodule in Reihe das Verbinden der Eingangsanschlüsse aller in Reihe verbundenen Untermodule mit dem Leistungsversorgungsnetz mit 25 kV/50 Hz bzw. mit der Masse Folgendes umfasst: Schließen des AC-Schalters zwischen dem Leistungsversorgungsbus und dem AC-Leistungsversorgungsnetz mit 25 kV/50 Hz und Verbinden des Massebusses mit der Masse.

5. Verarbeitungsverfahren nach Anspruch 1, wobei, wenn das Ziel-Eisenbahnleistungsversorgungssystem ein Eisenbahnleistungsversorgungssystem mit 15 kV/16,7 Hz ist, das Verbinden der Eingangsanschlüsse der N/2 Untermodule in jeder Gruppe von Untermodulen in Reihe nacheinander Folgendes umfasst: Verbinden des negativen Eingangsanschlusses des ersten Untermoduls mit dem positiven Eingangsanschluss des zweiten Untermoduls und Verbinden des negativen Eingangsanschlusses des zweiten Untermoduls mit dem positiven Eingangsanschluss des dritten Untermoduls, wobei die Konfiguration jedes Untermoduls (SMi) für die nachfolgenden Untermodule wiederholt wird bis zum Verbinden des negativen Eingangsanschlusses des (N/2-1)-ten Untermoduls mit dem positiven Eingangsanschluss des (N/2)-ten Untermoduls; und Verbinden des negativen Eingangsanschlusses des (N/2+1)-ten Untermoduls mit dem positiven Eingangsanschluss des (N/2+2)-ten Untermoduls und Verbinden des negativen Eingangsanschlusses des (N/2+2)-ten Untermoduls mit dem positiven Eingangsanschluss des (N/2+3)-ten Untermoduls, wobei die Konfiguration jedes Untermoduls (SMi) für die nachfolgenden Untermodule wiederholt wird bis zum Verbinden des negativen Eingangsanschlusses des (N-1)-ten Untermoduls mit dem positiven Eingangsanschluss des N-ten Untermoduls;
wobei das Parallelverbinden beider Gruppen von Untermodulen auf der Eingangsseite Folgendes umfasst: Verbinden des positiven Eingangsanschlusses des ersten Untermoduls mit dem positiven Eingangsanschluss des (N/2+1)-ten Untermoduls und Verbinden des negativen Eingangsanschlusses des (N/2)-ten Untermoduls mit dem negativen Eingangsanschluss des N-ten Untermoduls.

6. Verarbeitungsverfahren nach Anspruch 5, wobei das Verbinden der Eingangsanschlüsse der N/2 Untermodule in jeder Gruppe von Untermodulen in Reihe nacheinander Folgendes umfasst: Schließen der Schaltkomponente zwischen dem negativen Eingangsanschluss des ersten Untermoduls und dem positiven Eingangsanschluss des zweiten Untermoduls und Schließen der Schaltkomponente zwischen dem negativen Eingangsanschluss des zweiten Untermoduls und dem positiven Eingangsanschluss des dritten Untermoduls, wobei die Konfiguration jedes Untermoduls (SMi) für die nachfolgenden Untermodule wiederholt wird bis zum Schließen der Schaltkomponente zwischen dem negativen Eingangsanschluss des (N/2-1)-ten Untermoduls und dem positiven Eingangsanschluss des (N/2)-ten Untermoduls; Schließen der Schaltkomponente zwischen dem negativen Eingangsanschluss des (N/2+1)-ten Untermoduls und dem positiven Eingangsanschluss des (N/2+2)-ten Untermoduls und Schließen der Schaltkomponente zwischen dem negativen Eingangsanschluss des (N/2+2)-ten Untermoduls und dem positiven Eingangsanschluss des (N/2+3)-ten Untermoduls, wobei die Konfiguration jedes Untermoduls für die nachfolgenden Untermodule wiederholt wird bis zum Schließen der Schaltkomponente zwischen dem negativen Eingangsanschluss des (N-1)-ten Untermoduls und dem positiven Eingangsanschluss des N-ten Untermoduls;
wobei das Parallelverbinden der Eingangsanschlüsse beider Gruppen von Untermodulen Folgendes umfasst: Schließen der Schaltkomponente zwischen dem positiven Eingangsanschluss des ersten Untermoduls und dem Leistungsversorgungsbus und Schließen der Schaltkomponente zwischen dem positiven Eingangsanschluss des (N/2+1) Untermoduls und dem Leistungsversorgungsbus; Schließen der Schaltkomponente zwischen dem negativen Eingangsanschluss des (N/2) Untermoduls und dem Massebus und Schließen der Schaltkomponente zwischen dem negativen Eingangsanschluss des N-ten Untermoduls und dem Massebus;
wobei nach dem Parallelverbinden beider Gruppen von Untermodulen auf der Eingangsseite das Verbinden der beiden parallel verbundenen Gruppen von Untermodulen mit dem Leistungsversorgungsnetz mit 15 kV/16,7 Hz bzw. mit der Masse mit dem Leistungsversorgungsnetz mit 15 kV/16,7 Hz und mit der Masse Folgendes umfasst: Schließen des AC-Schalters zwischen dem Leistungsversorgungsbus und dem AC-Leistungsversorgungsnetz mit 15 kV/16,7 Hz und stets Verbinden des Massebusses mit der Masse.

7. Verarbeitungsverfahren nach Anspruch 1, wobei, wenn das Ziel-Eisenbahnleistungsversorgungssystem ein DC-Eisenbahnleistungsversorgungssystem mit 3 kV ist, das Verbinden der Eingangsanschlüsse der M Untermodule in jeder Gruppe von Untermodulen in Reihe Folgendes umfasst: Verbinden des negativen Eingangsanschlusses des ersten Untermoduls in der ersten Gruppe von Untermodulen mit dem positiven Eingangsanschluss des zweiten Untermoduls und Verbinden des negativen Eingangsanschlusses des zweiten Untermoduls mit dem positiven Eingangsanschluss des dritten Untermoduls bis zum Verbinden des negativen Eingangsanschlusses des (M-1)-ten Untermoduls mit dem positiven Eingangsanschluss des M-ten Untermoduls; Verbinden des negativen Eingangsanschlusses des (M+1)-ten Untermoduls in der zweiten Gruppe von Untermodulen mit dem positiven Eingangsanschluss des (M+2)-ten Untermoduls und Verbinden des negativen Eingangsanschlusses des (M+2)-ten Untermoduls mit dem positiven Eingangsanschluss des (M+3)-ten Untermoduls, wobei die Konfiguration jedes Untermoduls (SMi) für die nachfolgenden Untermodule wiederholt wird bis zum Verbinden des negativen Eingangsanschlusses des (2M-1)-ten Untermoduls mit dem positiven Eingangsanschluss des (2M)-ten Untermoduls; bis zum Verbinden des negativen Eingangsanschlusses des ((L-1)*M+1)-ten Untermoduls in der L-ten Gruppe von Untermodulen mit dem positiven Eingangsanschluss des ((L-1)*M+2)-ten Untermoduls und Verbinden des negativen Eingangsanschlusses des ((L-1)*M+2)-ten Untermoduls mit dem positiven Eingangsanschluss des ((L-1)*M+3)-ten Untermoduls bis zum Verbinden des negativen Eingangsanschlusses des (L*M-1)-ten Untermoduls mit dem positiven Eingangsanschluss des (L*M)-ten Untermoduls;
wobei das Parallelverbinden aller L Gruppen von Untermodulen auf der Eingangsseite Folgendes umfasst: Parallelverbinden der positiven Eingangsanschlüsse des ersten Untermoduls, des (M+1)-ten Untermoduls bis zum ((L-1)*M+1)-ten Untermodul und Parallelverbinden der negativen Eingangsanschlüsse des M-ten Untermoduls, des (2M)-ten Untermoduls bis zum (L*M)-ten Untermodul.

8. Verarbeitungsverfahren nach Anspruch 7, wobei das Verbinden der Eingangsanschlüsse der M Untermodule in jeder Gruppe von Untermodulen in Reihe Folgendes umfasst: Schließen der Schaltkomponente zwischen dem negativen Eingangsanschluss des ersten Untermoduls in der ersten Gruppe von Untermodulen und dem positiven Eingangsanschluss des zweiten Untermoduls und Schließen der Schaltkomponente zwischen dem negativen Eingangsanschluss des zweiten Untermoduls und dem positiven Eingangsanschluss des dritten Untermoduls, wobei die Konfiguration jedes Untermoduls (SMi) für die nachfolgenden Untermodule wiederholt wird bis zum Schließen der Schaltkomponente zwischen dem negativen Eingangsanschluss des (M-1)-ten Untermoduls und dem positiven Eingangsanschluss des M-ten Untermoduls; Schließen der Schaltkomponente zwischen dem negativen Eingangsanschluss des (M+1)-ten Untermoduls in der zweiten Gruppe von Untermodulen und dem positiven Eingangsanschluss des (M+2)-ten Untermoduls und Schließen der Schaltkomponente zwischen dem negativen Eingangsanschluss des (M+2)-ten Untermoduls und dem positiven Eingangsanschluss des (M+3)-ten Untermoduls, wobei die Konfiguration jedes Untermoduls für die nachfolgenden Untermodule wiederholt wird bis zum Schließen der Schaltkomponente zwischen dem negativen Eingangsanschluss des (2M-1)-ten Untermoduls und dem positiven Eingangsanschluss des (2M)-ten Untermoduls; wobei die Konfiguration jedes Untermoduls für die nachfolgenden Untermodule wiederholt wird bis zum Schließen der Schaltkomponente zwischen dem negativen Eingangsanschluss des ((L-1)*M+1)-ten Untermoduls in der L-ten Gruppe von Untermodulen und dem positiven Eingangsanschluss des ((L-1)*M+2)-ten Untermoduls, Schließen der Schaltkomponente zwischen dem negativen Eingangsanschluss des ((L-1)*M+2)-ten Untermoduls in der L-ten Gruppe von Untermodulen und dem positiven Eingangsanschluss des ((L-1)*M+3)-ten Untermoduls, wobei die Konfiguration jedes Untermoduls für die nachfolgenden Untermodule wiederholt wird bis zum Schließen der Schaltkomponente zwischen dem negativen Eingangsanschluss des (L*M-1)-ten Untermoduls in der L-ten Gruppe von Untermodulen und dem positiven Eingangsanschluss des (L*M)-ten Untermoduls;
wobei das Parallelverbinden aller L Gruppen von Untermodulen auf der Eingangsseite Folgendes umfasst: Schließen der Schaltkomponente zwischen dem positiven Eingangsanschluss des ersten Untermoduls und dem Leistungsversorgungsbus, Schließen der Schaltkomponente zwischen dem positiven Eingangsanschluss des (M+1)-ten Untermoduls und dem Leistungsversorgungsbus, wobei die Konfiguration jedes Untermoduls für die nachfolgenden Untermodule wiederholt wird bis zum Schließen der Schaltkomponente zwischen dem positiven Eingangsanschluss des ((L-1)*M+1)-ten Untermoduls und dem Leistungsversorgungsbus; Schließen der Schaltkomponente zwischen dem negativen Eingangsanschluss des M-ten Untermoduls und dem Massebus, Schließen der Schaltkomponente zwischen dem negativen Eingangsanschluss des (2M)-ten Untermoduls und dem Massebus, wobei die Konfiguration jedes Untermoduls für die nachfolgenden Untermodule wiederholt wird bis zum Schließen der Schaltkomponente zwischen dem negativen Eingangsanschluss des (L*M)-ten Untermoduls und dem Massebus;
wobei nach dem Parallelverbinden aller L Gruppen von Untermodulen auf der Eingangsseite das Verbinden aller L parallel verbundenen Gruppen von Untermodulen mit dem DC-Leistungsversorgungsnetz mit 3 kV bzw. mit der Masse Folgendes umfasst: Schließen des DC-Schalters zwischen dem Leistungsversorgungsbus und dem DC-Leistungsversorgungsnetz mit 3 kV und stets Verbinden des Massebusses mit der Masse.

9. Verarbeitungsverfahren nach Anspruch 1, wobei, wenn das Ziel-Eisenbahnleistungsversorgungssystem das DC-Eisenbahnleistungsversorgungssystem mit 1,5 kV ist,
das Verbinden der Eingangsanschlüsse der Q Untermodule in der Gruppe von Untermodulen in Reihe Folgendes umfasst: Verbinden des negativen Eingangsanschlusses des ersten Untermoduls in der ersten Gruppe von Untermodulen mit dem positiven Eingangsanschluss des zweiten Untermoduls, Verbinden des negativen Eingangsanschlusses des zweiten Untermoduls mit dem positiven Eingangsanschluss des dritten Untermoduls, wobei die Konfiguration jedes Untermoduls (SMi) für die nachfolgenden Untermodule wiederholt wird bis zum Verbinden des negativen Eingangsanschlusses des (Q-1)-ten Untermoduls mit dem positiven Eingangsanschluss des Q-ten Untermoduls; Verbinden des negativen Eingangsanschlusses des (Q+1)-ten Untermoduls in der zweiten Gruppe von Untermodulen mit dem positiven Eingangsanschluss des (Q+2)-ten Untermoduls, Verbinden des negativen Eingangsanschlusses des (Q+2)-ten Untermoduls mit dem positiven Eingangsanschluss des (Q+3)-ten Untermoduls bis zum Verbinden des negativen Eingangsanschlusses des (2Q-1)-ten Untermoduls mit dem positiven Eingangsanschluss des (2Q)-ten Untermoduls; wobei die Konfiguration jedes Untermoduls für die nachfolgenden Untermodule wiederholt wird bis zum Verbinden des negativen Eingangsanschlusses des ((P-1)*Q+1)-ten Untermoduls in der P-ten Gruppe von Untermodulen mit dem positiven Eingangsanschluss des ((P-1)*Q+2)-ten Untermoduls, Verbinden des negativen Eingangsanschlusses des ((P-1)*Q+2)-ten Untermoduls mit dem positiven Eingangsanschluss des ((P-1)*Q+3)-ten Untermoduls, wobei die Konfiguration jedes Untermoduls für die nachfolgenden Untermodule wiederholt wird bis zum Verbinden des negativen Eingangsanschlusses des (P*Q-1)-ten Untermoduls mit dem positiven Eingangsanschluss des (P*Q)-ten Untermoduls;
wobei das Parallelverbinden aller P Gruppen von Untermodulen auf der Eingangsseite Folgendes umfasst: Parallelverbinden der positiven Eingangsanschlüsse des ersten Untermoduls, des (Q+1)-ten Untermoduls bis zum ((P-1)*Q+1)-ten Untermodul und Parallelverbinden der negativen Eingangsanschlüsse des Q-ten Untermoduls, des (2Q)-ten Untermoduls bis zum (P*Q)-ten Untermodul.

10. Verarbeitungsverfahren nach Anspruch 9, wobei:
das Verbinden der Eingangsanschlüsse der Q Untermodule in der Gruppe von Untermodulen in Reihe Folgendes umfasst: Schließen der Schaltkomponente zwischen dem negativen Eingangsanschluss des ersten Untermoduls in der ersten Gruppe von Untermodulen und dem positiven Eingangsanschluss des zweiten Untermoduls und Schließen der Schaltkomponente zwischen dem negativen Eingangsanschluss des zweiten Untermoduls und dem positiven Eingangsanschluss des dritten Untermoduls, wobei die Konfiguration jedes Untermoduls (SMi) für die nachfolgenden Untermodule wiederholt wird bis zum Schließen der Schaltkomponente zwischen dem negativen Eingangsanschluss des (Q-1)-ten Untermoduls und dem positiven Eingangsanschluss des Q-ten Untermoduls; Schließen der Schaltkomponente zwischen dem negativen Eingangsanschluss des (Q+1)-ten Untermoduls in der zweiten Gruppe von Untermodulen und dem positiven Eingangsanschluss des (Q+2)-ten Untermoduls und Schließen der Schaltkomponente zwischen dem negativen Eingangsanschluss des (Q+2)-ten Untermoduls und dem positiven Eingangsanschluss des (Q+3)-ten Untermoduls, wobei die Konfiguration jedes Untermoduls für die nachfolgenden Untermodule wiederholt wird bis zum Schließen der Schaltkomponente zwischen dem negativen Eingangsanschluss des (2Q-1)-ten Untermoduls und dem positiven Eingangsanschluss des (2Q)-ten Untermoduls; wobei die Konfiguration jedes Untermoduls für die nachfolgenden Untermodule wiederholt wird bis zum Schließen der Schaltkomponente zwischen dem negativen Eingangsanschluss des ((P-1)*Q+1)-ten Untermoduls in der P-ten Gruppe von Untermodulen und dem positiven Eingangsanschluss des ((P-1)*Q+2)-ten Untermoduls, Schließen der Schaltkomponente zwischen dem negativen Eingangsanschluss des ((P-1)*Q+2)-ten Untermoduls und dem positiven Eingangsanschluss des ((P-1)*Q+3)-ten Untermoduls, wobei die Konfiguration jedes Untermoduls für die nachfolgenden Untermodule wiederholt wird bis zum Schließen der Schaltkomponente zwischen dem negativen Eingangsanschluss des (P*Q-1)-ten Untermoduls und dem positiven Eingangsanschluss des (P*Q)-ten Untermoduls;
wobei das Parallelverbinden aller P Gruppen von Untermodulen auf der Eingangsseite Folgendes umfasst: Schließen der Schaltkomponente zwischen dem positiven Eingangsanschluss des ersten Untermoduls und dem Leistungsversorgungsbus, Schließen der Schaltkomponente zwischen dem positiven Eingangsanschluss des (Q+1)-ten Untermoduls und dem Leistungsversorgungsbus, wobei die Konfiguration jedes Untermoduls (SMi) für die nachfolgenden Untermodule wiederholt wird bis zum Schließen der Schaltkomponente zwischen dem positiven Eingangsanschluss des ((P-1*Q+1)-ten Untermoduls und dem Leistungsversorgungsbus; Schließen der Schaltkomponente zwischen dem negativen Eingangsanschluss des Q-ten Untermoduls und dem Massebus, Schließen der Schaltkomponente zwischen dem negativen Eingangsanschluss des (2Q)-ten Untermoduls und dem Massebus, wobei die Konfiguration jedes Untermoduls für die nachfolgenden Untermodule wiederholt wird bis zum Schließen der Schaltkomponente zwischen dem negativen Eingangsanschluss des (P*Q)-ten Untermoduls und dem Massebus;
wobei nach dem Parallelverbinden aller P Gruppen von Untermodulen auf der Eingangsseite das Verbinden aller P parallel verbundenen Gruppen von Untermodulen mit dem DC-Leistungsversorgungsnetz mit 3 kV bzw. mit der Masse Folgendes umfasst: Schließen des DC-Schalters zwischen dem Leistungsversorgungsbus und dem DC-Leistungsversorgungsnetz mit 1,5 kV und Verbinden des Massebusses mit der Masse.

11. Netzseitiges Leistungswandlersystem einer elektrischen Mehrsystemlokomotive, die eine Verarbeitungsvorrichtung umfasst, wobei die Verarbeitungsvorrichtung Folgendes umfasst:
eine Bestimmungseinheit (10), die dazu konfiguriert ist, ein Ziel-Eisenbahnleistungsversorgungssystem eines Leistungsversorgungsnetzes für die elektrische Mehrsystemlokomotive zu bestimmen;
eine erste Verbindungseinheit (20), die dazu konfiguriert ist, unter dem Ziel-Eisenbahnleistungsversorgungssystem Eingangsanschlüsse von Untermodulen (SMi), wobei jedes Untermodul mit einem Mittelfrequenztransformator ausgestattet ist, in dem netzseitigen Leistungswandlersystem auf eine Zielweise zu verbinden; und
eine zweite Verbindungseinheit (30), die dazu konfiguriert ist, nach dem Verbinden der Eingangsanschlüsse der Untermodule auf die Zielweise das netzseitige Leistungswandlersystem mit dem Eisenbahnleistungsversorgungsnetz bzw. mit der Masse zu verbinden,
wobei das netzseitige Leistungswandlersystem Folgendes umfasst: einen Leistungsversorgungsbus, einen Massebus, N Untermodule und eine Vielzahl von Schaltkomponenten; wobei jedes Untermodul aus einem positiven Eingangsanschluss, einem negativen Eingangsanschluss, einem Vierquadrantenwandler, einem Mittelfrequenztransformator, einem DC/DC-Wandler, einem positiven Ausgangsanschluss und einem negativen Ausgangsanschluss besteht; wobei der positive Eingangsanschluss jedes Untermoduls durch eine Schaltkomponente mit dem Leistungsversorgungsbus verbunden ist; wobei der negative Eingangsanschluss jedes Untermoduls durch eine Schaltkomponente mit dem Massebus verbunden ist; und wobei der negative Eingangsanschluss jedes Untermoduls zudem durch eine Schaltkomponente mit dem positiven Eingangsanschluss des nächsten Untermoduls verbunden ist; wobei der negative Eingangsanschluss des ersten Untermoduls durch eine Schaltkomponente mit dem positiven Eingangsanschluss des zweiten Untermoduls verbunden ist und der negative Eingangsanschluss des zweiten Untermoduls durch eine Schaltkomponente mit dem positiven Eingangsanschluss des dritten Untermoduls verbunden ist, wobei die Konfiguration jedes Untermoduls (SMi) für die nachfolgenden Untermodule wiederholt wird, bis der negative Eingangsanschluss des (N-1)-ten Untermoduls durch eine Schaltkomponente mit dem positiven Eingangsanschluss des N-ten Untermoduls verbunden ist; wobei der negative Eingangsanschluss des N-ten Untermoduls durch eine Schaltkomponente mit dem positiven Eingangsanschluss des ersten Untermoduls verbunden ist; und wobei der Leistungsversorgungsbus durch Schließen eines AC- oder DC-Schalters mit einem Wechselstrom(AC)- oder Gleichstrom(DC)-Leistungsversorgungsnetz verbunden wird; wobei das netzseitige Leistungswandlersystem **dadurch gekennzeichnet ist, dass** es ferner Folgendes umfasst:
ein erstes Reihenverbindungsmodul, das dazu konfiguriert ist, die Eingangsanschlüsse aller Untermodule in Reihe nacheinander zu verbinden, falls das Ziel-Eisenbahnleistungsversorgungssystem ein Eisenbahnleistungsversorgungssystem mit 25 kV/50 Hz ist;
ein erstes Verbindungsmodul, das dazu konfiguriert ist, nach dem Verbinden der Eingangsanschlüsse aller Untermodule in Reihe alle in Reihe verbundenen Untermodule mit dem Leistungsversorgungsnetz mit 25 kV/50 Hz bzw. mit der Masse zu verbinden;
ein erstes Gruppierungsmodul, das dazu konfiguriert ist, N Untermodule in zwei Gruppen zu unterteilen, wobei eine Gruppe von Untermodulen aus N/2 Untermodulen besteht, falls das Ziel-Eisenbahnleistungsversorgungssystem ein Eisenbahnleistungsversorgungssystem mit 15 kV/16,7 Hz ist;
ein zweites Reihenverbindungsmodul, das dazu konfiguriert ist, die Eingangsanschlüsse der N/2 Untermodule in jeder Gruppe von Untermodulen in Reihe nacheinander zu verbinden;
ein erstes Parallelverbindungsmodul, das dazu konfiguriert ist, die zwei Gruppen von Untermodulen auf der Eingangsseite parallel zu verbinden, wobei das N die Gesamtanzahl von Untermodulen in dem netzseitigen Wandler bezeichnet;
ein zweites Verbindungsmodul, das dazu konfiguriert ist, die beiden Gruppen von Untermodulen auf der Eingangsseite parallel zu verbinden und die beiden parallel verbundenen Gruppen von Untermodulen mit dem Leistungsversorgungsnetz mit 15 kV/16,7 Hz bzw. mit der Masse zu verbinden;
ein zweites Gruppierungsmodul, das dazu konfiguriert ist, die N Untermodule in L Gruppen von Untermodulen zu unterteilen, wobei jede Gruppe von Untermodulen M Untermodule einschließt, wenn das Ziel-Eisenbahnleistungsversorgungssystem ein DC-Eisenbahnleistungsversorgungssystem mit 3 kV ist;
ein drittes Reihenverbindungsmodul, das dazu konfiguriert ist, die Eingangsanschlüsse der M Untermodule in jeder Gruppe in Reihe zu verbinden;
ein zweites Parallelverbindungsmodul, das dazu konfiguriert ist, alle L Gruppen von Untermodulen parallel nacheinander zu verbinden, wobei das N die Gesamtanzahl von Untermodulen in dem netzseitigen Wandler bezeichnet, L die Anzahl von Gruppen von Untermodulen ist, M die Anzahl von Untermodulen ist, die in jeder Gruppe eingeschlossen ist, und N=L*M;
ein drittes Verbindungsmodul, das dazu konfiguriert ist, die Eingangsanschlüsse zwischen den Gruppen von Untermodulen parallel nacheinander zu verbinden und die Eingangsanschlüsse mit dem DC-Leistungsversorgungsnetz mit 3 kV bzw. mit der Masse zu verbinden;
ein drittes Parallelverbindungsmodul, das dazu konfiguriert ist, N Untermodule in P Gruppen von Untermodulen zu unterteilen, wobei jede Gruppe von Untermodulen Q Untermodule einschließt, falls das Ziel-Eisenbahnleistungsversorgungssystem ein DC-Eisenbahnleistungsversorgungssystem mit 1,5 kV ist;
wobei die Eingangsanschlüsse der Q Untermodule in jeder Gruppe von Untermodulen in Reihe verbunden werden und alle P Gruppen von Untermodulen nacheinander parallel verbunden werden, wobei das N die Gesamtanzahl von Untermodulen in dem netzseitigen Wandler bezeichnet, P die Anzahl von Gruppen von Untermodulen ist, Q die Anzahl von Untermodulen ist, die in jeder Gruppe von Untermodulen eingeschlossen ist, und N=P*Q, wobei, da die Spannung des DC-Eisenbahnleistungsversorgungssystem mit 1,5 kV eine Hälfte der Spannung des DC-Eisenbahnleistungsversorgungssystems mit 3 kV ist, P=2L und Q=M/2;
wobei die zweite Verbindungseinheit (30) ein viertes Verbindungsmodul umfasst, das dazu konfiguriert ist, die Eingangsanschlüsse aller Untermodule parallel zu verbinden und die Eingangsanschlüsse aller Untermodule mit dem DC-Leistungsversorgungsnetz mit 1,5 kV bzw. mit der Masse zu verbinden;
wobei das erste Reihenverbindungsmodul dazu konfiguriert ist, wenn die Ziel-Eisenbahnleistungsversorgung ein Eisenbahnleistungsversorgungssystem mit 25 kV/50 Hz ist und die Zielweise definiert, den positiven Eingangsanschluss des ersten Untermoduls mit dem Leistungsversorgungsnetz mit 25 kV/50 Hz zu verbinden und den negativen Eingangsanschluss des N-ten Untermoduls mit der Masse zu verbinden;
wobei das zweite Verbindungsmodul dazu konfiguriert ist, wenn die Ziel-Eisenbahnleistungsversorgung ein Eisenbahnleistungsversorgungssystem mit 15 kV/16,7 Hz ist und die Zielweise definiert, nach Parallelverbinden des positiven Eingangsanschlusses des ersten Untermoduls mit dem positiven Eingangsanschluss des (N/2+1)-ten Untermoduls den positiven Eingangsanschluss des ersten Untermoduls und den positiven Eingangsanschluss des (N/2+1)-ten Untermoduls mit dem Leistungsversorgungsnetz mit 15 kV/16,7 Hz zu verbinden;
wobei das zweite Verbindungsmodul dazu konfiguriert ist, nach Parallelverbinden des negativen Eingangsanschlusses des (N/2)-ten Untermoduls mit dem negativen Eingangsanschluss des N-ten Untermoduls den negativen Eingangsanschluss des (N/2)-ten Untermoduls und den negativen Eingangsanschluss des N-ten Untermoduls mit der Masse zu verbinden;
wobei das dritte Verbindungsmodul dazu konfiguriert ist, wenn die Ziel-Eisenbahnleistungsversorgung ein DC-Eisenbahnleistungsversorgungssystem mit 3 kV ist und die Zielweise definiert, nach Parallelverbinden der positiven Eingangsanschlüsse des ersten Untermoduls, des (M+1)-ten Untermoduls bis zum ((L-1)*M+1)-ten Untermodul diese parallel verbundenen positiven Eingangsanschlüsse mit dem DC-Leistungsversorgungsnetz mit 3 kV zu verbinden;
wobei das dritte Verbindungsmodul dazu konfiguriert ist, nach Parallelverbinden der negativen Eingangsleistungen des M Untermoduls, des (2M)-ten Untermoduls bis zum (L*M)-ten Untermodul diese parallel verbundenen negativen Eingangsanschlüsse mit der Masse zu verbinden;
wobei das dritte Parallelverbindungsmodul dazu konfiguriert ist, wenn die Ziel-Eisenbahnleistungsversorgung ein DC-Eisenbahnleistungsversorgungssystem mit 1,5 kV ist und die Zielweise definiert, nach Parallelverbinden der positiven Eingangsanschlüsse des ersten Untermoduls, des (Q+1)-ten Untermoduls bis zum ((P-1)*Q+1)-ten Untermodul diese parallel verbundenen positiven Eingangsanschlüsse mit dem DC-Leistungsversorgungsnetz mit 1,5 kV zu verbinden;
wobei das dritte Parallelverbindungsmodul dazu konfiguriert ist, nach Parallelverbinden der negativen Eingangsanschlüsse des Q Untermoduls, des (2Q)-ten Untermoduls bis zum (P*Q)-ten Untermodul diese parallel verbundenen negativen Eingangsanschlüsse mit der Masse zu verbinden;
wobei die Schaltkomponente eine der Vielzahl von Schaltkomponenten ist;
wobei das erste/zweite/dritte Untermodul Untermodule unter den N Untermodulen sind;
wobei der AC- oder DC-Schalter Teil des netzseitigen Leistungswandlersystems ist;
wobei N eine gerade Zahl ist, wobei M eine gerade Zahl ist.

12. Netzseitiges Leistungswandlersystem nach Anspruch 11, wobei die Verarbeitungsvorrichtung ferner Folgendes umfasst:
eine Steuereinheit, die dazu konfiguriert ist, nach dem Verbinden der Eingangsanschlüsse der Untermodule auf die Zielweise und dann Verbinden des netzseitigen Leistungswandlersystems mit dem Eisenbahnleistungsnetz bzw. mit der Masse die Untermodule dahingehend zu steuern, dass sie in einem Betriebsmodus gemäß dem Ziel-Eisenbahnleistungsversorgungssystem und dem Betriebszustand der elektrischen Mehrsystemlokomotive arbeiten;
wobei die Steuereinheit ferner dazu konfiguriert ist, dass unter dem Eisenbahnleistungsversorgungssystem mit 25 kV/50 Hz und unter der Bedingung, dass sich die elektrische Mehrsystemlokomotive in einem Traktionsbetriebszustand befindet, die Untermodule in einem Gleichrichtermodus betrieben werden; wobei, wenn sich die elektrische Mehrsystemlokomotive in einem Nutzbremsbetriebszustand befindet, die Untermodule in einem Wechselrichterbetriebsmodus betrieben werden;
wobei die Steuereinheit ferner dazu konfiguriert ist, unter dem Eisenbahnleistungsversorgungssystem mit 15 kV/16,7 Hz und unter der Bedingung, dass sich die elektrische Mehrsystemlokomotive in dem Traktionsbetriebszustand befindet, die Untermodule dahingehend zu steuern, dass sie den Gleichrichtermodus wählen, und wobei, wenn sich die elektrische Mehrsystemlokomotive in dem Nutzbremsbetriebszustand befindet, die Untermodule in einem Wechselrichterbetriebsmodus betrieben werden;
wobei die Steuereinheit ferner zu Folgendem konfiguriert ist: dass unter dem DC-Eisenbahnleistungsversorgungssystem mit 3 kV und unter der Bedingung, dass sich die elektrische Mehrsystemlokomotive in einem Traktionsbetriebszustand befindet, die Untermodule in einem Vorwärts-DC-DC-Modus (d. h. Hochsetzmodus) betrieben werden; dass, wenn sich die elektrische Mehrsystemlokomotive in einem Nutzbremsbetriebszustand befindet und das DC-Leistungsversorgungsnetz mit 3 kV eine Fähigkeit zur Energieabsorption aufweist, die Untermodule in einem Rückwärts-DC-DC-Modus (d. h. Tiefsetzmodus) betrieben werden; dass, wenn sich die elektrische Mehrsystemlokomotive in einem Nicht-Nutzbremsbetriebszustand befindet, sich die Untermodule in einem Blockierzustand befinden; wobei der Vorwärts-DC/DC-Modus bedeutet, dass die elektrische Energie von den Eingangsanschlüssen zu den Ausgangsanschlüssen fließt, und der Rückwärts-DC/DC-Modus bedeutet, dass die elektrische Energie von den Ausgangsanschlüssen zu den Eingangsanschlüssen fließt;
wobei die Steuereinheit ferner zu Folgendem konfiguriert ist: dass unter dem DC-Eisenbahnleistungsversorgungssystem mit 1,5 kV und unter der Bedingung, dass sich die elektrische Mehrsystemlokomotive in einem Traktionsbetriebszustand befindet, die Untermodule in einem Vorwärts-DC-DC-Modus (d. h. Hochsetzmodus) betrieben werden; dass, wenn sich die elektrische Mehrsystemlokomotive in einem Nutzbremsbetriebszustand befindet und das DC-Leistungsversorgungsnetz mit 1,5 kV eine Fähigkeit zur Energieabsorption aufweist, die Untermodule in einem Rückwärts-DC-DC-Modus (d. h. Tiefsetzmodus) betrieben werden; dass, wenn sich die elektrische Mehrsystemlokomotive in einem Nicht-Nutzbremsbetriebszustand befindet, sich die Untermodule in einem Blockierzustand befinden; wobei der Vorwärts-DC/DC-Modus bedeutet, dass die elektrische Energie von den Eingangsanschlüssen zu den Ausgangsanschlüssen fließt, und der Rückwärts-DC/DC-Modus bedeutet, dass die elektrische Energie von den Ausgangsanschlüssen zu den Eingangsanschlüssen fließt;
wobei das erste Verbindungsmodul ferner dazu konfiguriert ist, den positiven Eingangsanschluss des ersten Untermoduls mit dem Leistungsversorgungsnetz mit 25 kV/50 Hz zu verbinden und den negativen Eingangsanschluss des N-ten Untermoduls mit der Masse zu verbinden;
wobei das zweite Verbindungsmodul ferner dazu konfiguriert ist, den positiven Eingangsanschluss des ersten Untermoduls parallel mit dem positiven Eingangsanschluss des (N/2+1)-ten Untermoduls zu verbinden und sie dann mit dem Leistungsversorgungsnetz mit 15 kV/16,7 Hz zu verbinden und den negativen Eingangsanschluss des (N/2)-ten Untermoduls parallel mit dem negativen Eingangsanschluss des N-ten Untermoduls zu verbinden und sie dann mit der Masse zu verbinden;
wobei das dritte Verbindungsmodul ferner zu Folgendem konfiguriert ist: die positiven Eingangsanschlüsse des ersten Untermoduls, des (M+1)-ten Untermoduls bis zum ((L-1)*M+1)-ten Untermodul parallel zu verbinden und sie dann mit dem DC-Leistungsversorgungsnetz mit 3 kV zu verbinden; und die negativen Eingangsanschlüsse des M Untermoduls, des (2M)-ten Untermoduls bis zum (L*M)-ten Untermodul parallel zu verbinden und sie dann mit der Masse zu verbinden;
wobei das vierte Verbindungsmodul ferner zu Folgendem konfiguriert ist: die positiven Eingangsanschlüsse des ersten Untermoduls, des (Q+1)-ten Untermoduls bis zum ((P-1)*Q+1)-ten Untermodul parallel zu verbinden und sie dann mit dem DC-Leistungsversorgungsnetz mit 1,5 kV zu verbinden; und die negativen Eingangsanschlüsse des Q Untermoduls, des (2Q)-ten Untermoduls bis zum (P*Q)-ten Untermodul parallel zu verbinden und sie dann mit der Masse zu verbinden.

## Revendications

1. Procédé de traitement pour un système convertisseur de puissance côté réseau d'une locomotive électrique multisystème, comprenant :
la détermination (101) d'un système d'alimentation électrique ferroviaire cible d'un réseau d'alimentation électrique pour la locomotive électrique multisystème :
sous le système d'alimentation électrique ferroviaire cible, la connexion (102) de ports d'entrée de sous-modules (SMi), chaque sous-module étant équipé d'un transformateur moyenne fréquence, dans le système convertisseur de puissance côté réseau de manière ciblée ; et
après la connexion des ports d'entrée des sous-modules de la manière ciblée, la connexion (103) du système convertisseur de puissance côté réseau au réseau électrique ferroviaire et à la masse respectivement,
dans lequel le système convertisseur de puissance côté réseau est constitué : d'un bus d'alimentation électrique, d'un bus de masse, de N sous-modules et d'une pluralité de composants de commutation, N est un nombre pair ; chaque sous-module (SMi) est constitué d'un port d'entrée positif, d'un port d'entrée négatif, d'un convertisseur à quatre quadrants, d'un transformateur moyenne fréquence, d'un convertisseur CC/CC, d'un port de sortie positif et d'un port de sortie négatif ; le port d'entrée positif de chaque sous-module est connecté au bus d'alimentation électrique à travers un composant de commutation ; le port d'entrée négatif de chaque sous-module est connecté au bus de masse à travers un composant de commutation ; et le port d'entrée négatif de chaque sous-module est également connecté au port d'entrée positif du sous-module suivant à travers un composant de commutation ; le port d'entrée négatif du premier sous-module est connecté au port d'entrée positif du deuxième sous-module à travers un composant de commutation, et le port d'entrée négatif du deuxième sous-module est connecté au port d'entrée positif du troisième sous-module à travers un composant de commutation, la configuration de chaque sous-module (SMi) est répétée pour les sous-modules suivants jusqu'à ce que le port d'entrée négatif du (N-1)-ième sous-module soit connecté au port d'entrée positif du N-ième sous-module à travers un composant de commutation ; le port d'entrée négatif du N-ième sous-module est connecté au port d'entrée positif du premier sous-module à travers un composant de commutation ; et le bus d'alimentation électrique est connecté à un réseau d'alimentation électrique en courant alternatif (CA) ou en courant continu (CC) en fermant un commutateur CA ou CC ;
le procédé étant **caractérisé en ce que** :
lorsque l'alimentation électrique ferroviaire cible est un système d'alimentation électrique ferroviaire de 25 kV/50 Hz, la connexion des ports d'entrée des sous-modules dans le système convertisseur de puissance côté réseau de la manière ciblée comprend :
la connexion des ports d'entrée de l'ensemble des sous-modules en série tour à tour ;
après la connexion des ports d'entrée des sous-modules de la manière ciblée, la connexion du système convertisseur de puissance côté réseau au réseau d'alimentation électrique et à la masse respectivement, comprend : après la connexion des ports d'entrée de tous les sous-modules en série, la connexion de l'ensemble des sous-modules connectés en série au réseau d'alimentation électrique 25 kV/50 Hz et à la masse respectivement ;
dans lequel après la connexion des ports d'entrée de l'ensemble des sous-modules (SMi) en série, la connexion de l'ensemble des sous-modules connectés en série au réseau d'alimentation électrique de 25 kV/50 Hz et à la masse comprend respectivement : la connexion du port d'entrée positif du premier sous-module au réseau d'alimentation de 25 kV/50 Hz, et la connexion du port d'entrée négatif du N-ième sous-module à la masse ;
dans lequel, lorsque le système d'alimentation électrique ferroviaire cible est un système d'alimentation électrique ferroviaire de 15 kV/16,7 Hz, la connexion des ports d'entrée des sous-modules du système convertisseur de puissance côté réseau de la manière ciblée comprend : la division des N sous-modules en deux groupes, chaque groupe de sous-modules étant constitué de N/2 sous-modules ; la connexion des ports d'entrée des N/2 sous-modules dans chaque groupe de sous-modules en série tour à tour ; et la connexion des deux groupes de sous-modules du côté entrée en parallèle, dans lequel N désigne le nombre total de sous-modules dans le convertisseur côté réseau ;
après la connexion des ports d'entrée des sous-modules de la manière ciblée, la connexion du système convertisseur de puissance côté réseau au réseau d'alimentation électrique et à la masse comprend : après la connexion des deux groupes de sous-modules du côté entrée en parallèle, la connexion des deux groupes de sous-modules connectés en parallèle au réseau d'alimentation électrique de 15 kV/16,7 Hz et à la masse respectivement ;
dans lequel, après la connexion des deux groupes de sous-modules (SMi) du côté entrée en parallèle, la connexion des deux groupes de sous-modules connectés en parallèle au réseau d'alimentation électrique de 15 kV/16,7 Hz et à la masse comprend respectivement : après la connexion du port d'entrée positif du premier sous-module au port d'entrée positif du (N/2+1)-ième sous-module en parallèle, la connexion du port d'entrée positif du premier sous-module et du port d'entrée positif du (N/2+1)-ième sous-module au réseau d'alimentation de 15 kV/16,7 Hz, et après la connexion du port d'entrée négatif du (N/2)-ième sous-module au port d'entrée négatif du N-ième sous-module en parallèle, la connexion du port d'entrée négatif du (N/2)-ième sous-module et du port d'entrée négatif du N-ième sous-module à la masse ;
dans lequel, lorsque le système d'alimentation électrique ferroviaire cible est un système d'alimentation électrique ferroviaire CC de 3 kV, la connexion des ports d'entrée des sous-modules dans le système convertisseur de puissance côté réseau de la manière ciblée comprend : la division des N sous-modules en L groupes de sous-modules, chaque groupe de sous-modules comprenant M sous-modules ; la connexion des ports d'entrée des M sous-modules dans chaque groupe en série, M est un nombre pair ; et la connexion de l'ensemble des L groupes de sous-modules du côté entrée en parallèle, dans lequel N désigne le nombre total de sous-modules dans le convertisseur côté réseau, L est le nombre de groupes de sous-modules, M est le nombre de sous-modules inclus dans chaque groupe, et N=L*M ;
après la connexion des ports d'entrée des sous-modules de la manière ciblée, la connexion du système convertisseur de puissance côté réseau au réseau d'alimentation électrique et à la masse comprend : après la connexion de l'ensemble des L groupes de sous-modules du côté entrée en parallèle, la connexion de l'ensemble des L groupes de sous-modules connectés en parallèle au réseau d'alimentation électrique de 3 kV CC et à la masse respectivement ;
dans lequel, après la connexion de l'ensemble des L groupes de sous-modules (SMi) du côté entrée en parallèle, la connexion de l'ensemble des L groupes de sous-modules connectés en parallèle au réseau d'alimentation électrique de 3 kV CC et à la masse comprend respectivement : après la connexion en parallèle des ports d'entrée positifs du premier sous-module, du (M+1)-ième sous-module jusqu'au ((L-1)* M+1)-ième sous-module, la connexion de ces ports d'entrée positifs connectés en parallèle au réseau d'alimentation électrique de 3 kV CC ; et après la connexion en parallèle des ports d'entrée négatifs des M sous-modules, du ième sous-module jusqu'au (L* M)-ième sous-module, la connexion de ces ports d'entrée négatifs connectés en parallèle à la masse ;
dans lequel, lorsque le système d'alimentation électrique ferroviaire cible est un système d'alimentation électrique ferroviaire de 1,5 kV CC,
la connexion des ports d'entrée des sous-modules dans le système convertisseur de puissance côté réseau de la manière ciblée comprend : la division des N sous-modules en P groupes de sous-modules, chaque groupe de sous-modules comprenant Q sous-modules ; la connexion des ports d'entrée des Q sous-modules dans chaque groupe ; et la connexion de l'ensemble des P groupes de sous-modules du côté entrée en parallèle, dans lequel N désigne le nombre total de sous-modules dans le convertisseur côté réseau, P est le nombre de groupes de sous-modules, Q est le nombre de sous-modules inclus dans chaque groupe et N = P*Q ; lorsque la tension du système d'alimentation électrique ferroviaire de 1,5 kV CC est la moitié de la tension du système d'alimentation électrique ferroviaire de 3 kV CC, P = 2L et Q = M/2 ;
après la connexion des ports d'entrée des sous-modules de la manière ciblée, la connexion d'un système convertisseur de puissance côté réseau au réseau d'alimentation électrique et à la masse comprend : après la connexion de l'ensemble des P groupes de sous-modules du côté entrée en parallèle, la connexion de l'ensemble des P groupes de sous-modules connectés en parallèle au réseau d'alimentation de 1,5 kV CC et à la masse respectivement ;
dans lequel, après la connexion de l'ensemble des P groupes de sous-modules du côté entrée en parallèle, la connexion de l'ensemble des P groupes de sous-modules connectés en parallèle au réseau d'alimentation électrique de 1,5 kV CC et à la masse comprend : après la connexion en parallèle des ports d'entrée positifs du premier sous-module, du (Q+1)-ième sous-module jusqu'au ((P-1)*Q+1)-ième sous-module, la connexion de ces ports d'entrée positifs connectés en parallèle au réseau d'alimentation de 1,5 kV CC ; et après connexion en parallèle des ports d'entrée négatifs des Q sous-modules, du (2Q)-ième sous-module jusqu'au (P*Q)-ième sous-module, la connexion de ces puissances d'entrée négatives connectées en parallèle à la masse.

2. Procédé de traitement selon la revendication 1, dans lequel après la connexion des ports d'entrée des sous-modules (SMi) de la manière ciblée, puis la connexion du système convertisseur de puissance côté réseau au réseau électrique ferroviaire et à la masse respectivement, le procédé comprenant en outre :
la commande des sous-modules pour qu'ils fonctionnent dans un mode de fonctionnement correspondant en fonction du système d'alimentation électrique ferroviaire cible et de l'état de fonctionnement de la locomotive électrique multisystème ;
la commande du sous-module pour qu'il fonctionne dans le mode de fonctionnement correspondant en fonction du système d'alimentation électrique ferroviaire cible et de l'état de fonctionnement de la locomotive électrique multisystème comprend : sous le système d'alimentation électrique ferroviaire de 25 kV/50 Hz et à condition que la locomotive électrique multisystème soit dans un état de fonctionnement de traction, les sous-modules fonctionnent en mode redresseur ; lorsque la locomotive électrique multisystème est dans un état de fonctionnement de freinage par récupération, les sous-modules fonctionnent en mode de fonctionnement inverseur ;
la commande du sous-module pour qu'il fonctionne dans le mode de fonctionnement correspondant en fonction du système d'alimentation électrique ferroviaire cible et de l'état de fonctionnement de la locomotive électrique multisystème comprend : sous le système d'alimentation électrique ferroviaire de 15 kV/16,7 Hz et à condition que la locomotive électrique multisystème soit dans l'état de fonctionnement de traction, les sous-modules fonctionnent en mode redresseur ; lorsque la locomotive électrique multisystème est dans l'état de fonctionnement de freinage par récupération, les sous-modules fonctionnent en mode de fonctionnement inverseur ;
la commande du sous-module pour qu'il fonctionne dans le mode de fonctionnement correspondant en fonction du système d'alimentation électrique ferroviaire cible et de l'état de fonctionnement de la locomotive électrique multisystème comprend : sous le système d'alimentation électrique ferroviaire de 3kV CC et à condition que la locomotive électrique multisystème soit dans un état de fonctionnement de traction, les sous-modules fonctionnent en mode CC-CC direct ; lorsque la locomotive électrique multisystème est dans un état de fonctionnement de freinage par récupération et que le réseau d'alimentation électrique de 3 kV CC a une capacité d'absorption d'énergie, les sous-modules fonctionnent en mode CC-CC inversé ; lorsque la locomotive électrique multisystème est dans un état de fonctionnement de freinage sans récupération, les sous-modules sont en état de blocage ; où le mode CC-CC direct signifie que l'énergie électrique circule à partir des ports d'entrée vers les ports de sortie, et le mode CC-CC inversé signifie que l'énergie électrique circule à partir des ports de sortie vers les ports d'entrée ;
la commande du sous-module pour qu'il fonctionne dans le mode de fonctionnement correspondant en fonction du système d'alimentation électrique ferroviaire cible et de l'état de fonctionnement de la locomotive électrique multisystème comprend : sous le système d'alimentation électrique ferroviaire de 1,5 kV CC et à condition que la locomotive électrique multisystème soit dans un état de fonctionnement de traction, les sous-modules fonctionnent en mode CC-CC direct ; lorsque la locomotive électrique multisystème est dans un état de fonctionnement de freinage par récupération et que le réseau d'alimentation électrique de 1,5 kV CC a une capacité d'absorption d'énergie, les sous-modules fonctionnent en mode CC-CC inversé ; lorsque la locomotive électrique multisystème est dans un état de fonctionnement de freinage sans récupération, les sous-modules sont en état de blocage ; où le mode CC-CC direct signifie que l'énergie électrique circule à partir des ports d'entrée vers les ports de sortie, et le mode CC-CC inversé signifie que l'énergie électrique circule à partir des ports de sortie vers les ports d'entrée.

3. Procédé de traitement selon la revendication 1, dans lequel lorsque l'alimentation électrique ferroviaire cible est un système d'alimentation électrique ferroviaire de 25 kV/50 Hz, la connexion des ports d'entrée de l'ensemble des sous-modules en série tour à tour comprend :
la connexion du port d'entrée négatif du premier sous-module au port d'entrée positif du deuxième sous-module, et la connexion du port d'entrée négatif du deuxième sous-module au port d'entrée positif du troisième sous-module, la configuration de chaque sous-module (SMi) est répétée pour les sous-modules suivants jusqu'à la connexion du port d'entrée négatif du (N-1)-ième sous-module au port d'entrée positif du N-ième sous-module, dans lequel N désigne le nombre total de sous-modules dans le sous-module de convertisseur côté réseau.

4. Procédé de traitement selon la revendication 3, dans lequel la connexion des ports d'entrée de l'ensemble des sous-modules en série tour à tour comprend : la fermeture du composant de commutation entre le port d'entrée négatif du premier sous-module et le port d'entrée positif du deuxième sous-module, et la fermeture du composant de commutation entre le port d'entrée négatif du deuxième sous-module et le port d'entrée positif du troisième sous-module, la configuration de chaque sous-module (SMi) est répétée pour les sous-modules suivants jusqu'à la fermeture du composant de commutation entre le port d'entrée négatif du (N-1)-ième sous-module et le port d'entrée positif du N-ième sous-module, la fermeture du composant de commutation entre le port d'entrée positif du premier sous-module et le bus d'alimentation électrique, et la fermeture du composant de commutation entre le port d'entrée négatif du N-ième sous-module et le bus de masse ;
après la connexion des ports d'entrée de l'ensemble des sous-modules en série, la connexion des ports d'entrée de l'ensemble des sous-modules connectés en série au réseau d'alimentation électrique de 25 kV/50 Hz et à la masse respectivement, comprend : la fermeture du commutateur CA entre le bus d'alimentation électrique et le réseau d'alimentation électrique CA de 25 kV/50 Hz, et la connexion du bus de masse à la masse.

5. Procédé de traitement selon la revendication 1, dans lequel lorsque le système d'alimentation électrique ferroviaire cible est un système d'alimentation électrique ferroviaire de 15 kV/16,7 Hz, la connexion des ports d'entrée des N/2 sous-modules dans chaque groupe de sous-modules en série tour à tour comprend : la connexion du port d'entrée négatif du premier sous-module au port d'entrée positif du deuxième sous-module, et la connexion du port d'entrée négatif du deuxième sous-module au port d'entrée positif du troisième sous-module, la configuration de chaque sous-module (SMi) est répétée pour les sous-modules suivants jusqu'à la connexion du port d'entrée négatif du (N/2-1)-ième sous-module au port d'entrée positif du (N/2)-ième sous-module ; et la connexion du port d'entrée négatif du (N/2+1)-ième sous-module au port d'entrée positif du (N/2+2)-ième sous-module, et la connexion du port d'entrée négatif du (N/2+2)-ième sous-module au port d'entrée positif du (N/2+3)-ième sous-module, la configuration de chaque sous-module (SMi) est répétée pour les sous-modules suivants jusqu'à la connexion du port d'entrée négatif du (N-1)-ième sous-module au port d'entrée positif du N-ième sous-module ;
la connexion des deux groupes de sous-modules du côté entrée en parallèle comprend : la connexion du port d'entrée positif du premier sous-module au port d'entrée positif du (N/2+1)-ième sous-module, et la connexion du port d'entrée négatif du (N/2)-ième sous-module au port d'entrée négatif du N-ième sous-module.

6. Procédé de traitement selon la revendication 5, dans lequel la connexion des ports d'entrée des N/2 sous-modules dans chaque groupe de sous-modules en série tour à tour comprend : la fermeture du composant de commutation entre le port d'entrée négatif du premier sous-module et le port d'entrée positif du deuxième sous-module, et la fermeture du composant de commutation entre le port d'entrée négatif du deuxième sous-module et le port d'entrée positif du troisième sous-module, la configuration de chaque sous-module (SMi) est répétée pour les sous-modules suivants jusqu'à la fermeture du composant de commutation entre le port d'entrée négatif du (N/2-1)-ième sous-module et le port d'entrée positif du (N/2)-ième sous-module ; la fermeture du composant de commutation entre le port d'entrée négatif du (N/2+1)-ième sous-module et le port d'entrée positif du (N/2+2)-ième sous-module, et la fermeture du composant de commutation entre le port d'entrée négatif du (N/2+2)-ième sous-module et le port d'entrée positif du (N/2+3)-ième sous-module, la configuration de chaque sous-module est répétée pour les sous-modules suivants jusqu'à la fermeture du composant de commutation entre le port d'entrée négatif du (N-1)-ième sous-module et le port d'entrée positif du N-ième sous-module ;
la connexion des ports d'entrée des deux groupes de sous-modules en parallèle comprend : la fermeture du composant de commutation entre le port d'entrée positif du premier sous-module et le bus d'alimentation électrique, et la fermeture du composant de commutation entre le port d'entrée positif du (N/2+1) sous-module et le bus d'alimentation électrique ; la fermeture du composant de commutation entre le port d'entrée négatif du (N/2) sous-module et le bus de masse, et la fermeture du composant de commutation entre le port d'entrée négatif du N-ième sous-module et le bus de masse ;
après la connexion des deux groupes de sous-modules du côté entrée en parallèle, la connexion des deux groupes de sous-modules connectés en parallèle au réseau d'alimentation électrique de 15 kV/16,7 Hz et à la masse respectivement au réseau d'alimentation électrique de 15 kV/16,7 Hz et à la masse comprend : la fermeture du commutateur CA entre le bus d'alimentation électrique et le réseau d'alimentation électrique de 15 kV/16,7 Hz CA, et toujours la connexion du bus de masse à la masse.

7. Procédé de traitement selon la revendication 1, dans lequel lorsque le système d'alimentation électrique ferroviaire cible est un système d'alimentation électrique ferroviaire de 3 kV CC, la connexion des ports d'entrée des M sous-modules dans chaque groupe de sous-modules en série comprend : la connexion du port d'entrée négatif du premier sous-module du premier groupe de sous-modules au port d'entrée positif du deuxième sous-module, et la connexion du port d'entrée négatif du deuxième sous-module au port d'entrée positif du troisième sous-module, jusqu'à la connexion du port d'entrée négatif du (M-1)-ième sous-module au port d'entrée positif du M-ième sous-module ; la connexion du port d'entrée négatif du (M+1)-ième sous-module dans le second groupe de sous-modules au port d'entrée positif du (M+2)-ième sous-module, et la connexion du port d'entrée négatif du (M+2)-ième sous-module au port d'entrée positif du (M+3)-ième sous-module, la configuration de chaque sous-module (SMi) est répétée pour les sous-modules suivants jusqu'à la connexion du port d'entrée négatif du (2M-1)-ième sous-module au port d'entrée positif du (2M)-ième sous-module ; jusqu'à la connexion du port d'entrée négatif du ((L-1)*M+1)-ième sous-module dans le L-ième groupe de sous-modules au port d'entrée positif du ((L-1)*M+2)-ième sous-module, et la connexion du port d'entrée négatif du ((L-1)*M+2)-ième sous-module au port d'entrée positif du ((L-1)*M+3)-ième sous-module, jusqu'à la connexion du port d'entrée négatif du (L*M-1)-ième sous-module au port d'entrée positif du (L*M)-ième sous-module ;
la connexion de l'ensemble des L groupes de sous-modules du côté entrée en parallèle comprend : la connexion des ports d'entrée positifs du premier sous-module, du (M+1)-ième sous-module jusqu'au ((L-1)*M+1)-ième sous-module en parallèle, et la connexion des ports d'entrée négatifs du M-ième sous-module, du (2M)-ième sous-module jusqu'au (L*M)-ième sous-module en parallèle.

8. Procédé de traitement selon la revendication 7, dans lequel la connexion des ports d'entrée des M sous-modules dans chaque groupe de sous-modules en série comprend : la fermeture du composant de commutation entre le port d'entrée négatif du premier sous-module dans le premier groupe de sous-modules et le port d'entrée positif du deuxième sous-module, et la fermeture du composant de commutation entre le port d'entrée négatif du deuxième sous-module et le port d'entrée positif du troisième sous-module, la configuration de chaque sous-module (SMi) est répétée pour les sous-modules suivants jusqu'à la fermeture du composant de commutation entre le port d'entrée négatif du (M-1)-ième sous-module et le port d'entrée positif du M-ième sous-module ; la fermeture du composant de commutation entre le port d'entrée négatif du (M+1)-ième sous-module dans le second groupe de sous-modules et le port d'entrée positif du (M+2)-ième sous-module, et la fermeture du composant de commutation entre le port d'entrée négatif du (M+2)-ième sous-module et le port d'entrée positif du (M+3)-ième sous-module, la configuration de chaque sous-module est répétée pour les sous-modules suivants jusqu'à la fermeture du composant de commutation entre le port d'entrée négatif du (2M-1)-ième sous-module et le port d'entrée positif du (2M)-ième sous-module ; la configuration de chaque sous-module est répétée pour les sous-modules suivants jusqu'à la fermeture du composant de commutation entre le port d'entrée négatif du ((L-1)*M+1)-ième sous-module dans le L-ième groupe de sous-modules et le port d'entrée positif du ((L-1)*M+2)-ième sous-module, la fermeture du composant de commutation entre le port d'entrée négatif du ((L-1)*M+2)-ième sous-module dans le L-ième groupe de sous-modules et le port d'entrée positif du ((L-1)*M+3)-ième sous-module, la configuration de chaque sous-module est répétée pour les sous-modules suivants jusqu'à la fermeture du composant de commutation entre le port d'entrée négatif du (L*M-1)-ième sous-module dans le L-ième groupe de sous-modules et le port d'entrée positif du (L*M)-ième sous-module ;
la connexion de l'ensemble des L groupes de sous-modules du côté entrée en parallèle comprend : la fermeture du composant de commutation entre le port d'entrée positif du premier sous-module et le bus d'alimentation électrique, la fermeture du composant de commutation entre le port d'entrée positif du (M+1)-ième sous-module et le bus d'alimentation électrique, la configuration de chaque sous-module est répétée pour les sous-modules suivants jusqu'à la fermeture du composant de commutation entre le port d'entrée positif du ((L-1)*M+1)-ième sous-module et le bus d'alimentation électrique ; la fermeture du composant de commutation entre le port d'entrée négatif du M-ième sous-module et le bus de masse, la fermeture du composant de commutation entre le port d'entrée négatif du (2M)-ième sous-module et le bus de masse, la configuration de chaque sous-module est répétée pour les sous-modules suivants jusqu'à la fermeture du composant de commutation entre le port d'entrée négatif du (L*M)-ième sous-module et le bus de masse ;
après la connexion de l'ensemble des L groupes de sous-modules du côté entrée en parallèle, la connexion de l'ensemble des L groupes de sous-modules connectés en parallèle au réseau d'alimentation électrique de 3 kV CC et à la masse comprend respectivement : la fermeture du commutateur CC entre le bus d'alimentation électrique et le réseau d'alimentation électrique de 3 kV CC, et toujours la connexion du bus de masse à la masse.

9. Procédé de traitement selon la revendication 1, dans lequel lorsque le système d'alimentation électrique ferroviaire cible est le système d'alimentation électrique ferroviaire de 1,5 kV CC,
la connexion des ports d'entrée des Q sous-modules dans le groupe de sous-modules en série comprend : la connexion du port d'entrée négatif du premier sous-module dans le premier groupe de sous-modules au port d'entrée positif du deuxième sous-module, la connexion du port d'entrée négatif du deuxième sous-module au port d'entrée positif du troisième sous-module, la configuration de chaque sous-module (SMi) est répétée pour les sous-modules suivants jusqu'à la connexion du port d'entrée négatif du (Q-1)-ième sous-module au port d'entrée positif du Q-ième sous-module ; la connexion du port d'entrée négatif du (Q+1)-ième sous-module dans le second groupe de sous-modules au port d'entrée positif du (Q+2)-ième sous-module, la connexion du port d'entrée négatif du (Q+2)-ième sous-module au port d'entrée positif du (Q+3)-ième sous-module, jusqu'à la connexion du port d'entrée négatif du (2Q-1)-ième sous-module au port d'entrée positif du (2Q)-ième sous-module ; la configuration de chaque sous-module est répétée pour les sous-modules suivants jusqu'à la connexion du port d'entrée négatif du ((P-1)*Q+1)-ième sous-module dans le P-ième groupe de sous-modules au port d'entrée positif du ((P-1)*Q+2)-ième sous-module, la connexion du port d'entrée négatif du ((P-1)*Q+2)-ième sous-module au port d'entrée positif du ((P-1)*Q+3)-ième sous-module, la configuration de chaque sous-module est répétée pour les sous-modules suivants jusqu'à la connexion du port d'entrée négatif du (P*Q-1)-ième sous-module au port d'entrée positif du (P*Q)-ième sous-module ;
la connexion de l'ensemble des P groupes de sous-modules du côté entrée en parallèle comprend : la connexion des ports d'entrée positifs du premier sous-module, du (Q+1)-ième sous-module jusqu'au ((P-1)*Q+1)-ième sous-module en parallèle, et la connexion des ports d'entrée négatifs du Q-ième sous-module, du (2Q)-ième sous-module jusqu'au (P*Q)-ième sous-module en parallèle.

10. Procédé de traitement selon la revendication 9, dans lequel :
la connexion des ports d'entrée des Q sous-modules dans le groupe de sous-modules en série comprend : la fermeture du composant de commutation entre le port d'entrée négatif du premier sous-module dans le premier groupe de sous-modules et le port d'entrée positif du deuxième sous-module, et la fermeture du composant de commutation entre le port d'entrée négatif du deuxième sous-module et le port d'entrée positif du troisième sous-module, la configuration de chaque sous-module (SMi) est répétée pour les sous-modules suivants jusqu'à la fermeture du composant de commutation entre le port d'entrée négatif du (Q-1)-ième sous-module et le port d'entrée positif du Q-ième sous-module ; la fermeture du composant de commutation entre le port d'entrée négatif du (Q+1)-ième sous-module dans le second groupe de sous-modules et le port d'entrée positif du (Q+2)-ième sous-module, et la fermeture du composant de commutation entre le port d'entrée négatif du (Q+2)-ième sous-module et le port d'entrée positif du (Q+3)-ième sous-module, la configuration de chaque sous-module est répétée pour les sous-modules suivants jusqu'à la fermeture du composant de commutation entre le port d'entrée négatif du (2Q-1)-ième sous-module et le port d'entrée positif du (2Q)-ième sous-module ; la configuration de chaque sous-module est répétée pour les sous-modules suivants jusqu'à la fermeture du composant de commutation entre le port d'entrée négatif du ((P-1)*Q+1)-ième sous-module dans le P-ième groupe de sous-modules et le port d'entrée positif du ((P-1)*Q+2)-ième sous-module, la fermeture du composant de commutation entre le port d'entrée négatif du ((P-1)*Q+2)-ième sous-module et le port d'entrée positif du ((P-1)*Q+3)-ième sous-module, la configuration de chaque sous-module est répétée pour les sous-modules suivants jusqu'à la fermeture du composant de commutation entre le port d'entrée négatif du (P*Q-1)-ième sous-module et le port d'entrée positif du (P*Q)-ième sous-module ;
la connexion de l'ensemble des P groupes de sous-modules du côté entrée en parallèle comprend : la fermeture du composant de commutation entre le port d'entrée positif du premier sous-module et le bus d'alimentation électrique, la fermeture du composant de commutation entre le port d'entrée positif du (Q+1)-ième sous-module et le bus d'alimentation électrique, la configuration de chaque sous-module (SMi) est répétée pour les sous-modules suivants jusqu'à la fermeture du composant de commutation entre le port d'entrée positif du ((P-1)*Q+1)-ième sous-module et le bus d'alimentation électrique ; la fermeture du composant de commutation entre le port d'entrée négatif du Q-ième sous-module et le bus de masse, la fermeture du composant de commutation entre le port d'entrée négatif du (2Q)-ième sous-module et le bus de masse, la configuration de chaque sous-module est répétée pour les sous-modules suivants jusqu'à la fermeture du composant de commutation entre le port d'entrée négatif du (P*Q)-ième sous-module et le bus de masse ;
après la connexion de l'ensemble des P groupes de sous-modules du côté entrée en parallèle, la connexion de l'ensemble des P groupes de sous-modules connectés en parallèle au réseau d'alimentation électrique de 1,5 kV CC et à la masse comprend respectivement : la fermeture du commutateur CC entre le bus d'alimentation électrique et le réseau d'alimentation électrique de 1,5 kV CC, et la connexion du bus de masse à la masse.

11. Système convertisseur de puissance côté réseau d'une locomotive électrique multisystème comprenant un appareil de traitement, ledit appareil de traitement comprenant :
une unité de détermination (10), configurée pour déterminer un système d'alimentation électrique ferroviaire cible d'un réseau d'alimentation électrique pour la locomotive électrique multisystème ;
une première unité de connexion (20), configurée pour, sous le système d'alimentation électrique ferroviaire cible, connecter des ports d'entrée de sous-modules (SMi), chaque sous-module étant équipé d'un transformateur moyenne fréquence, dans le système convertisseur de puissance côté réseau de manière ciblée ; et
une seconde unité de connexion (30), configurée pour, après la connexion des ports d'entrée des sous-modules de la manière ciblée, connecter le système convertisseur de puissance côté réseau au réseau d'alimentation électrique ferroviaire et à la masse respectivement,
dans lequel le système convertisseur de puissance côté réseau comprend : un bus d'alimentation électrique, un bus de masse, N sous-modules et une pluralité de composants de commutation ; chaque sous-module est constitué d'un port d'entrée positif, d'un port d'entrée négatif, d'un convertisseur à quatre quadrants, d'un transformateur moyenne fréquence, d'un convertisseur CC/CC, d'un port de sortie positif et d'un port de sortie négatif ; le port d'entrée positif de chaque sous-module est connecté au bus d'alimentation électrique à travers un composant de commutation ; le port d'entrée négatif de chaque sous-module est connecté au bus de masse à travers un composant de commutation ; et le port d'entrée négatif de chaque sous-module est également connecté au port d'entrée positif du sous-module suivant à travers un composant de commutation ; le port d'entrée négatif du premier sous-module est connecté au port d'entrée positif du deuxième sous-module à travers un composant de commutation et le port d'entrée négatif du deuxième sous-module est connecté au port d'entrée positif du troisième sous-module à travers un composant de commutation, la configuration de chaque sous-module (SMi) est répétée pour les sous-modules suivants jusqu'à ce que le port d'entrée négatif du (N-1)-ième sous-module soit connecté au port d'entrée positif du N-ième sous-module à travers un composant de commutation ; le port d'entrée négatif du N-ième sous-module est connecté au port d'entrée positif du premier sous-module à travers un composant de commutation ; et le bus d'alimentation électrique est connecté à un réseau d'alimentation électrique en courant alternatif (CA) ou en courant continu (CC) en fermant un commutateur CA ou CC ; le système convertisseur de puissance côté réseau étant **caractérisé en ce qu'**il comprend en outre :
un premier module de connexion série, configuré pour connecter les ports d'entrée de l'ensemble des sous-modules en série tour à tour, si le système d'alimentation électrique ferroviaire cible est un système d'alimentation électrique ferroviaire de 25 kV/50 Hz ;
un premier module de connexion, configuré pour connecter l'ensemble des sous-modules connectés en série au réseau d'alimentation électrique de 25 kV/50 Hz et à la masse respectivement après la connexion des ports d'entrée de l'ensemble des sous-modules en série ;
un premier module de regroupement, configuré pour diviser N sous-modules en deux groupes, groupe de sous-modules constitué de N/2 sous-modules si le système d'alimentation électrique ferroviaire cible est un système d'alimentation électrique ferroviaire de 15 kV/16,7 Hz ;
un deuxième module de connexion série, configuré pour connecter les ports d'entrée des N/2 sous-modules dans chaque groupe de sous-modules en série tour à tour ;
un premier module de connexion parallèle, configuré pour connecter les deux groupes de sous-modules du côté entrée en parallèle, dans lequel N désigne le nombre total de sous-modules dans le convertisseur côté réseau ;
un deuxième module de connexion, configuré pour connecter les deux groupes de sous-modules du côté entrée en parallèle et connecter les deux groupes de sous-modules connectés en parallèle au réseau d'alimentation électrique de 15 kV/16,7 Hz et à la masse respectivement ;
un second module de regroupement, configuré pour diviser les N sous-modules en L groupes de sous-modules, chaque groupe de sous-modules comportant M sous-modules lorsque le système d'alimentation électrique ferroviaire cible est un système d'alimentation électrique ferroviaire de 3 kV CC ;
un troisième module de connexion série, configuré pour connecter les ports d'entrée des M sous-modules dans chaque groupe en série ;
un deuxième module de connexion parallèle, configuré pour connecter l'ensemble des L groupes de sous-modules en parallèle tour à tour, dans lequel N désigne le nombre total de sous-modules dans le convertisseur côté réseau, L est le nombre de groupes de sous-modules, M est le nombre de sous-modules inclus dans chaque groupe, et N = L*M ;
un troisième module de connexion, configuré pour connecter les ports d'entrée entre les groupes de sous-modules en parallèle tour à tour, et connecter les ports d'entrée au réseau d'alimentation électrique de 3 kV CC et à la masse respectivement ;
un troisième module de connexion parallèle, configuré pour diviser N sous-modules en P groupes de sous-modules, chaque groupe de sous-modules comportant Q sous-modules si le système d'alimentation électrique ferroviaire cible est un système d'alimentation électrique ferroviaire de 1,5 kV CC ;
dans lequel les ports d'entrée des Q sous-modules dans chaque groupe de sous-modules sont connectés en série, et l'ensemble des P groupes de sous-modules sont connectés en parallèle tour à tour, dans lequel N désigne le nombre total de sous-modules dans le convertisseur côté réseau, P est le nombre de groupes de sous-modules, Q est le nombre de sous-modules inclus dans chaque groupe de sous-modules et N = P*Q lorsque la tension système d'alimentation électrique ferroviaire de 1,5 kV CC est la moitié de la tension du système d'alimentation électrique ferroviaire de 3 kV CC, P = 2L et Q = M/2 ;
dans lequel la seconde unité de connexion (30) comprend un quatrième module de connexion, configuré pour connecter les ports d'entrée de l'ensemble des sous-modules en parallèle, et la connexion des ports d'entrée de l'ensemble des sous-modules au réseau d'alimentation électrique de 1,5 kV CC et à la masse respectivement ;
le premier module de connexion série est configuré pour, lorsque l'alimentation électrique ferroviaire cible est un système d'alimentation électrique ferroviaire de 25 kV/50 Hz, et en définissant la manière ciblée, connecter le port d'entrée positif du premier sous-module au réseau d'alimentation électrique de 25 kV/50 Hz, et connecter le port d'entrée négatif du N-ième sous-module à la masse ;
le deuxième module de connexion est configuré pour, lorsque l'alimentation électrique ferroviaire cible est un système d'alimentation électrique ferroviaire de 15 kV/16,7 Hz, et en définissant la manière ciblée, connecter le port d'entrée positif du premier sous-module et le port d'entrée positif du (N/2+1)-ième sous-module au réseau d'alimentation électrique de 15 kV/16,7 Hz après la connexion du port d'entrée positif du premier sous-module au port d'entrée positif du (N/2+1)-ième sous-module en parallèle ;
le second module de connexion est configuré pour connecter le port d'entrée négatif du (N/2)-ième sous-module et le port d'entrée négatif du N-ième sous-module à la masse et après la connexion du port d'entrée négatif du (N/2)-ième sous-module au port d'entrée négatif du N-ième sous-module en parallèle ;
le troisième module de connexion est configuré pour, lorsque l'alimentation électrique ferroviaire cible est un système d'alimentation électrique ferroviaire de 3 kV CC, et en définissant la manière ciblée, connecter ces ports d'entrée positifs connectés en parallèle au réseau d'alimentation électrique de 3 kV CC après la connexion en parallèle des ports d'entrée positifs du premier sous-module, du (M+1)-ième sous-module jusqu'au ((L-1)*M+1)-ième sous-module ;
le troisième module de connexion est configuré pour connecter ces puissances d'entrée négatives connectées en parallèle à la masse après la connexion en parallèle des ports d'entrée négatifs des M sous-modules, du (2M)-ième sous-module jusqu'au (L*M)-ième sous-module ;
le troisième module de connexion parallèle est configuré pour, lorsque l'alimentation électrique ferroviaire cible est un système d'alimentation électrique ferroviaire de 1,5 kV CC, et en définissant la manière ciblée, connecter ces ports d'entrée positifs connectés en parallèle au réseau d'alimentation électrique de 1,5 kV CC après la connexion en parallèle des ports d'entrée positifs du premier sous-module, du (Q+1)-ième sous-module jusqu'au ((P-1)*Q+1)-ième sous-module ;
le troisième module de connexion parallèle est configuré pour connecter ces ports d'entrée négatifs connectés en parallèle à la masse après la connexion en parallèle des ports d'entrée négatifs des Q sous-modules, du (2Q)-ième sous-module jusqu'au (P*Q)-ième sous-module ;
le composant de commutation est l'un de la pluralité de composants de commutation ;
les premier/deuxième/troisième sous-modules sont des sous-modules parmi les N sous-modules ;
le commutateur CA ou CC fait partie du système convertisseur de puissance côté réseau :
N est un nombre pair, M est un nombre pair.

12. Système convertisseur de puissance côté réseau selon la revendication 11, l'appareil de traitement comprenant en outre :
une unité de commande, configurée pour, après la connexion des ports d'entrée des sous-modules de la manière ciblée, puis la connexion du système convertisseur de puissance côté réseau au réseau électrique ferroviaire et à la masse respectivement, commander les sous-modules pour qu'ils fonctionnent dans un mode de fonctionnement en fonction du système d'alimentation électrique ferroviaire cible et de l'état de fonctionnement de la locomotive électrique multisystème ;
l'unité de commande est en outre configurée pour que, sous le système d'alimentation électrique ferroviaire de 25 kV/50 Hz et à condition que la locomotive électrique multisystème soit dans un état de fonctionnement de traction, les sous-modules fonctionnent en mode redresseur ; lorsque la locomotive électrique multisystème est dans un état de fonctionnement de freinage par récupération, les sous-modules fonctionnent en mode de fonctionnement inverseur ;
l'unité de commande est en outre configurée pour, sous le système d'alimentation électrique ferroviaire de 15 kV/16,7 Hz et à condition que la locomotive électrique multisystème soit dans l'état de fonctionnement de traction, commander le sous-module afin de choisir le mode redresseur, et lorsque la locomotive électrique multisystème est dans l'état de fonctionnement de freinage par récupération, les sous-modules fonctionnent en mode de fonctionnement inverseur ;
l'unité de commande est en outre configurée pour : sous le système d'alimentation électrique ferroviaire de 3 kV CC et à condition que la locomotive électrique multisystème soit dans un état de fonctionnement de traction, les sous-modules fonctionnent en mode CC-CC direct (c'est-à-dire en mode boost) ; lorsque la locomotive électrique multisystème est dans un état de fonctionnement de freinage par récupération et que le réseau d'alimentation électrique de 3 kV CC a une capacité d'absorption d'énergie, les sous-modules fonctionnent en mode CC-CC inversé (c'est-à-dire en mode abaisseur) ; lorsque la locomotive électrique multisystème est dans un état de fonctionnement de freinage sans récupération, les sous-modules sont en état de blocage ; où le mode CC-CC direct signifie que l'énergie électrique circule des ports d'entrée vers les ports de sortie, et le mode CC-CC inversé signifie que l'énergie électrique circule des ports de sortie vers les ports d'entrée ;
l'unité de commande est en outre configurée pour : sous le système d'alimentation électrique ferroviaire de 1,5 kV CC et à condition que la locomotive électrique multisystème soit dans un état de fonctionnement de traction, les sous-modules fonctionnent en mode CC-CC direct (c'est-à-dire en mode boost) ; lorsque la locomotive électrique multisystème est dans un état de fonctionnement de freinage par récupération et que le réseau d'alimentation électrique de 1,5 kV CC a une capacité d'absorption d'énergie, les sous-modules fonctionnent en mode CC-CC inversé (c'est-à-dire en mode abaisseur) ; lorsque la locomotive électrique multisystème est dans un état de fonctionnement de freinage sans récupération, les sous-modules sont en état de blocage ; où le mode CC-CC direct signifie que l'énergie électrique circule des ports d'entrée vers les ports de sortie, et le mode CC-CC inversé signifie que l'énergie électrique circule des ports de sortie vers les ports d'entrée ;
le premier module de connexion est en outre configuré pour connecter le port d'entrée positif du premier sous-module au réseau d'alimentation électrique de 25 kV/50 Hz, et connecter le port d'entrée négatif du N-ième sous-module à la masse ;
le deuxième module de connexion est en outre configuré pour connecter le port d'entrée positif du premier sous-module au port d'entrée positif du (N/2+1)-ième sous-module en parallèle, puis les connecter au réseau d'alimentation électrique de 15 kV/16,7 Hz, et connecter le port d'entrée négatif du (N/2)-ième sous-module au port d'entrée négatif du N-ième sous-module en parallèle, puis les connecter à la masse ;
le troisième module de connexion est en outre configuré pour : connecter les ports d'entrée positifs du premier sous-module, du (M+1)-ième sous-module jusqu'au ((L-1)*M+1)-ième sous-module en parallèle, puis les connecter au réseau d'alimentation électrique de 3 kV CC ; et connecter les ports d'entrée négatifs des M sous-modules, du (2M)-ième sous-module jusqu'au (L*M)-ième sous-module en parallèle, puis les connecter à la masse ;
le quatrième module de connexion est en outre configuré pour : connecter les ports d'entrée positifs du premier sous-module, du (Q+1)-ième sous-module jusqu'au ((P-1)*Q+1)-ième sous-module en parallèle, puis les connecter au réseau d'alimentation électrique de 1,5 kV CC ; et connecter les ports d'entrée négatifs des Q sous-modules, du (2Q)-ième sous-module jusqu'au (P*Q)-ième sous-module en parallèle, puis les connecter à la masse.
